# EUROPÄISCHE PATENTSCHRIFT

(11) **EP 3 137 566 B1**
(45) Veröffentlichungstag und Bekanntmachung des Hinweises auf die Patenterteilung: **28.07.2021**
(21) Anmeldenummer: 15717882.3
(22) Anmeldetag: 21.04.2015
(51) Int. Cl.: C09J 7/00

(54) **VERFAHREN ZUR HERSTELLUNG EINER VERKLEBUNG AUF PERMEAT SENSIBLEN OBERFLÄCHEN**
METHOD FOR PRODUCING AN ADHESION ON PERMEATE-SENSITIVE SURFACES
PROCÉDÉ POUR RÉALISER UN COLLAGE SUR DES SURFACES SENSIBLES AUX PERMÉATS

(30) Priorität: 29.04.2014 DE 102014208111
(43) Veröffentlichungstag der Anmeldung: 08.03.2017
(73) Patentinhaber: tesa SE, 22848 Norderstedt (DE)
(72) Erfinder: BAI, Minyoung, 22529 Hamburg (DE); ELLINGER, Jan, 20255 Hamburg (DE); JUNGHANS, Monika, 22457 Hamburg (DE); KEITE-TELGENBÜSCHER, Klaus, 22529 Hamburg (DE); SCHERF, Lesmona, 20253 Hamburg (DE)
(74) Vertreter: tesa SE
(86) Internationale Anmeldenummer: PCT/EP2015/058586
(87) Internationale Veröffentlichungsnummer: WO 2015/165773

(56) Entgegenhaltungen:
- WO-A2-2004/009720
- WO-A2-2012/030494
- DE-A1-102012 202 377

## Beschreibung

Die vorliegende Erfindung betrifft das Gebiet der Klebebänder, insbesondere der spaltbaren Klebebänder, zur Verklebung und Verkapselung von Permeat sensibler Oberflächen. Im Speziellen betrifft die vorliegende Erfindung ein Verfahren zur Herstellung einer Verklebung unter Verwendung eines spaltbaren, insbesondere lagerfähigen, Klebebandabschnitts umfassend (iii) mindestens eine zumindest teilflächig vorhandene, spaltbare Verklebungsschicht mit einer komplexen Viskosität kleiner gleich 10⁵ Pas, gemessen nach ISO 6721-10 bei 23 °C und einer Frequenz von 1 rad/s, umfassend mindestens einen abbindbaren Flüssigklebstoff. Der vorbeschriebene spaltbare Klebebandabschnitt, der mindestens einmal gespaltene Klebebandabschnitt mit einer mindestens einmal gespaltenen und in der Schichtdicke reduzierten Verklebungsschicht sowie die mindestens einmal gespaltene Verklebungsschicht werden jeweils zur mehrfachen Verklebung und Verkapselung Permeat sensibler Oberflächen, vorzugsweise von beispielsweise optoelektronischen Anordnungen, bereitgestellt. Ferner ist Gegenstand der Erfindung ein Verfahren zur Herstellung einer Barriereschicht.

Barriereklebebänder sind überall notwendig, wo Permeat sensible Bauteile, insbesondere elektronische Elemente, geschützt werden müssen. Hierzu sind zahlreiche Barriereklebebänder bekannt, deren Klebemassen permeationshemmend sind. Solche Barriereklebebänder für anorganische und/oder organische (Opto-)Elektronik, insbesondere für die organische (Opto-)Elektronik, müssen eine flexible Verklebung ermöglichen, die gleichzeitig eine Permeationsbarriere für Permeate, wie Sauerstoff und/oder Wasserdampf, darstellen. Die flexiblen Klebelösungen sollen nicht nur eine gute Haftung zwischen zwei Substraten erzielen, sondern zusätzlich Eigenschaften, wie hohe Scherfestigkeit und Schälfestigkeit, chemische Beständigkeit, Alterungsbeständigkeit, hohe Transparenz, einfache Prozessierbarkeit sowie hohe Flexibilität und Biegsamkeit erfüllen.

Für diesen Ansatz werden spezielle Barriereklebemassen verwendet, die eine geringe Permeabilität für Sauerstoff und insbesondere Wasserdampf aufweisen und eine ausreichende Haftung auf der (opto-)elektronischen Anordnung und ihren Bauteilen haben sowie gut auf diese auffließen können. Ein geringes Auffließvermögen auf der (opto-)elektronischen Anordnung kann durch unvollständige Benetzung der jeweiligen Oberfläche und zurückbleibende Poren, die Barrierewirkung an den Grenzflächen verringern, wodurch ein Eindringen von Sauerstoff und Wasserdampf unabhängig von den Eigenschaften der Klebemasse ermöglicht wird. Nur wenn der Kontakt zwischen Masse und Substrat durchgängig ist, sind die Masseeigenschaften der bestimmende Faktor für die Barrierewirkung der Klebemasse.

Hierfür werden bisher vor allem Flüssigklebstoffe und Adhäsive auf Basis von Epoxiden verwendet (WO 98/21287 A1; US 4,051,195 A; US 4,552,604 A). Diese haben durch eine starke Vernetzung einen geringen Diffusionsterm. Eine vollflächige Verklebung ist aufgrund des durch die Aushärtung auftretenden Schrumpfes kaum möglich, da es beim Aushärten zu Spannungen zwischen Klebstoff und Substrat kommt. Die DE 10 2008 060 113 A1 beschreibt ein Verfahren zur Kapselung einer elektronischen Anordnung gegen Permeaten, bei dem eine Haftklebemasse auf Basis von Butylenblockcopolymeren, insbesondere Isobutylenblockcopolymeren, genutzt wird, und die Verwendung einer solchen Klebemasse in einem Kapselungsverfahren. Die EP 1 518 912 A1 lehrt eine Klebemasse zur Kapselung eines Elektrolumineszenzelements, das eine photokationisch härtbare Verbindung und einen photokationischen Initiator enthält sowie einen Klebstoff auf Epoxy-Basis. Die US 2009/026934 A1 beschreibt Klebemasseschichten zur Verkapselung organischer Elektrolumineszenz-elemente, die Polyisobutylen und ein hydriertes Kohlenwasserstoffharz enthalten. Zur Vernetzung nach Applikation können verschiedene Reaktivharze, wie auch Acrylate, eingesetzt werden. WVTR-Werte liegen bei den Beispielen typischerweise zwischen 5 und 20 g/m² pro Tag. Die WO 2008/144080 A1 lehrt Aufbauten mit empfindlichen organischen Schichten, die mit einem gehärteten elastomeren Laminierklebstoff gekapselt sind. Als Klebstoff kommen Mischungen aus reaktiven Oligomeren und/oder Polymeren und reaktiven Monomeren, wie (Meth)acrylat-Gruppen, zum Einsatz. WO 2012030494 A2 beschreibt ein Verfahren zur Herstellung eines Bildschirms, bei dem eine Schicht eines härtbaren Flüssigklebstoffs auf ein Haftklebeband beschichtet wird.

Bislang wurde in keinem Stand der Technik ein Klebeband mit einer Flüssigklebstoffschicht offenbart, das für die Lagerung und den Transport gut geeignet ist und gleichzeitig die Anforderung an die Verklebung und Verkapselung elektronischer Anordnungen erfüllt. Das Problem der Herstellung einer solchen Lager- und Transportfähigkeit wird nicht thematisiert und es werden auch keine Lösungsansätze vorgeschlagen. Der Einsatz konventioneller Release-Liner zur Abdeckung der Flüssigklebstoffschicht aus dem Stand der Technik, wie dies im Bereich der Haftklebebänder üblich ist, ist hier nicht möglich, da beim Ablösen dieser Liner vor der Applikation stets eine signifikante Anhaftung des Flüssigklebstoffs von der Flüssigkeitsschicht auf dem Liner auftritt.

Weiterhin bekannt sind mit Flüssigklebstoff imprägnierte Flächengebilde, wie zum Beispiel Prepregs zur Herstellung von Leiterplatten oder Bauteilen aus Faserverbundkunststoffen. Es handelt sich dabei um textile Flächengebilde, die mit einem Reaktivharz imprägniert sind. Zur Herstellung der Lager- und Transportfähigkeit werden die Reaktivharze in der Regel angeliert, d.h. die Härtungsreaktion wird initiiert und in einem frühen Stadium gestoppt (sog. B-Zustand). Dabei tritt eine deutliche Viskositätserhöhung des Harzes auf, was das imprägnierte Gebilde handhabbar macht. Prepregs dieser Art sind haftklebrig und können somit bei Raumtemperatur zusammenlaminiert werden. Wie Klebebänder werden sie in der Regel mit Release-Linern eingedeckt, um sie stapelbar oder aufwickelbar zu gestalten. Nachteilig an diesem Stand der Technik ist, dass die angelierten Prepregs gekühlt gelagert werden müssen, um ein Weiterlaufen der Härtungsreaktion zu verhindern. Die Viskositätserhöhung vermindert zudem die Benetzungsfähigkeit der Substratoberfläche bei einer Verklebung.

Weitere mit Flüssigharz imprägnierte Flächengebilde sind elektrische Isolationsfolien, die in der Regel aus harzgetränktem Papier oder Fasergebilden bestehen. Diese Materialien sind unter den Bezeichnungen Hartpapier oder Hartgewebe bekannt, wobei sich auch in diesen Materialien das Harz in einem B-Zustand befindet, in der Regel aber nicht mehr klebrig ist und ohne Liner gestapelt oder aufgewickelt werden kann. Nachteilig ist, dass diese Materialien nur unter Wärme und/oder hohem Druck laminiert werden können.

Bekannt sind auch Klebebänder oder Klebepads, die zumindest eine Schicht aus einem stark angedickten reaktiven Flüssigklebstoff enthalten (zum Beispiel Henkel Powerknete - 2K-System). Die Andickung wird vor allem durch einen hohen Zusatz von Füllstoffen erreicht, wodurch diese Art der Klebstoffe im Wesentlichen plastisch verformbar wird, aber nur noch in geringem Maße fließfähig ist. Dies ist nachteilig für das Auffließverhalten auf eine Substratoberfläche, insbesondere bei elektronischen Anordnungen. Solche Klebebänder oder Pads können mit konventionellen Linern für den Transport und die Lagerung eingedeckt werden.

Daher ist es Aufgabe der vorliegenden Erfindung, ein Verfahren bereitzustellen, worin eine Verklebung auf mindestens einer Permeat sensiblen Oberfläche bereitgestellt wird, zum Beispiel auf elektronischen Bauteilen und Anordnungen. Weiter soll ein Verfahren zur Herstellung einer Verklebung zur Verbindung, Anhaftung, Fixierung und Verkapselung von Oberflächen und damit zur Herstellung einer Barriereschicht auf einem Substrat zum Schutz vor Permeaten bereitgestellt werden. Es soll ebenfalls ein Verfahren bereitgestellt werden, durch das eine Verklebung zwischen zwei Substraten hergestellt werden kann. Eine weitere Aufgabe der Erfindung ist die Bereitstellung eines Verfahrens zur Dosierung eines Klebebandabschnitts. Ferner soll ein Verfahren entwickelt werden, um eine mehrfache Verwendbarkeit eines Klebebandabschnitts zu ermöglichen.

Um die Aufgaben lösen zu können, wurde herausgefunden, dass ein Klebebandabschnitt mit Barriereeigenschaften nicht nur eine permeationshemmende Klebemasse umfassen muss, sondern auch an der Grenzfläche zwischen Klebemasse und Verklebungssubstrat hervorragend abgedichtet werden muss. Die Lösung der vorliegenden Erfindung wird durch die Gegenstände der unabhängigen Patentansprüche beschrieben sowie in konkreter Ausgestaltung in den Unteransprüchen als auch detailliert in der Beschreibung, den Beispielen und den Figuren, dargestellt. Die Figuren sind schematische Zeichnungen, die nicht zwingend maßstabsgetreu sein müssen und lediglich die wesentlichen Merkmale sowie die beanspruchte Anordnung aufzeigen.

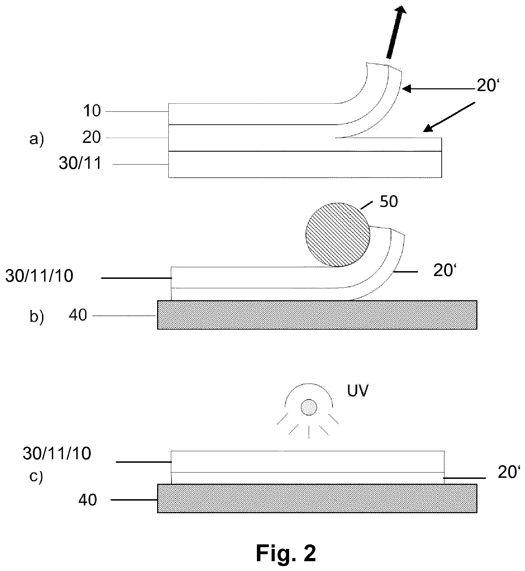

Ein Gegenstand der vorliegenden Erfindung ist ein Verfahren zur Herstellung einer Verklebung (Fig. 2, Fig. 4, Fig. 6), insbesondere zur Verkapselung einer gegenüber Permeat sensiblen Oberfläche eines Substrats und/oder zur Verbindung von Substraten, umfassend die Schritte
- Bereitstellen eines spaltbaren Klebebandabschnitts umfassend mindestens eine zumindest teilflächig vorhandene, spaltbare Verklebungsschicht mit einer komplexen Viskosität kleiner gleich 10⁵ Pas, vorzugsweise kleiner gleich 1000 Pas, besonders bevorzugt kleiner gleich 10 Pas und größer gleich 50 mPas und vorzugsweise größer gleich 1 Pas, gemessen nach ISO 6721-10 (Dynamisch Mechanische Analyse DMA) bei 23 °C und einer Frequenz von 1 rad/s, insbesondere und/oder mit einem Verlustfaktor tan delta von größer gleich 1, gemessen mittels Dynamisch mechanischer Analyse DMA bei 23 °C und einer Frequenz von 1 rad/s, umfassend mindestens einen abbindbaren Flüssigklebstoff, vorzugsweise mindestens ein Epoxid,
- Spalten der mindestens einen spaltbaren Verklebungsschicht, und
- Erhalten mindestens einer mindestens einmal gespaltenen, insbesondere in der Schichtdicke, bezogen auf die ursprüngliche Schichtdicke, reduzierte, Verklebungsschicht,
- in Kontaktbringen der mindestens einen gespaltenen Verklebungsschicht mit mindestens einem Substrat, insbesondere mit einer Oberfläche des Substrats und
- Abbinden des mindestens einen Flüssigklebstoffs in der einen mindestens einmal gespaltenen Verklebungsschicht.

Für den Fall, dass die Trägerschicht selbst eine abbindbare Klebemasse ist, findet das Abbinden auch in der Trägerschicht selbst statt.

Substrat im Sinne der Erfindung umfasst jedes Material, an dem die gespaltene Verklebungsschicht anhaftet. Insbesondere umfasst das Substrat mindestens ein Material oder Werkstoff oder zumindest Teilbereiche, die verkapselt werden können und vor Eindringen von Permeaten, wie Sauerstoff und/oder Wasser beziehungsweise Wasserdampf geschützt werden sollen. Solche Substrate sind insbesondere in elektronischen Bauteilen und Anordnungen, insbesondere in optoelektronischen Einheiten, zu finden. Im erfindungsgemäßen Verfahren werden solche Substrate verkapselt und/oder zwei solcher Substrate miteinander verklebt, insbesondere zwei Substrate unterschiedlicher Werkstoffe. Bevorzugt wird das erfindungsgemäße Verfahren zur Verklebung von Substraten mit einer gemittelten Rautiefe r_{z} von mehr als 1 µm, insbesondere mehr als 10 µm, verwendet.

Klebebandabschnitt im Sinne der Erfindung umfasst ein transport- und lagerfähiges zu einer Rolle oder Banderole aufgewickeltes Klebeband sowie daraus erhältliche Abschnitte in den üblichen Formen und Dimensionen wie Stanzlinge, Blätter und Etiketten.

Verkapselung im Sinne der Erfindung bedeutet die mindestens teilweise Umhüllung eines Substrates. Insbesondere die Umhüllung solcher Materialien und/oder Oberflächen eines Substrates, die eine erhöhte Empfindlichkeit gegenüber physikalischen Einwirkungen, insbesondere Eindringen und/oder Durchdringen von Permeaten, aufweisen. Bevorzugt ist eine vollständige Verkapselung des Substrates, besonders bevorzugt ohne Poren und ohne Luftblasen.

Permeate umfassen eine Vielzahl von niedermolekularen organischen oder anorganischen Verbindungen, die durch Sorption an der Grenzfläche, wie Gase, Dämpfe oder in Flüssigkeiten gelöste Chemikalien oder suspendierte Stoffe, durch Diffusion oder durch Desorption, wie ein Adsorbat, welches als Gas auf der anderen Seite des Feststoffes entweichen. Permeate durchdringen den Festkörper beziehungsweise das feste Material durch Poren beziehungsweise molekulare Zwischenräume. Permeate umfassen insbesondere Wasserdampf und Sauerstoff.

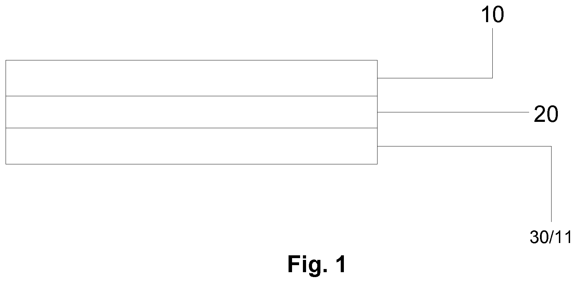

Verklebung im Sinne der Erfindung ist eine Verbindung, die in dem erfindungsgemäßen Verfahren durch die Verklebungsschicht hergestellt wird und zwar zwischen Verklebungsschicht und einem Substrat, einer Trägerschicht, Deckschicht und/oder einem zweiten Substrat (Figuren 1-6).

Im erfindungsgemäßen Verfahren wird ein spaltbarer Klebebandabschnitt verklebt, welcher umfasst
(i) mindestens eine Trägerschicht,
   wobei die Trägerschicht insbesondere umfasst a) mindestens eine Haftklebemasse oder b) ein Gemisch aus mindestens einer Haftklebemasse und mindestens einem abbindbaren Flüssigklebstoff oder ein Gemisch aus mindestens einer Haftklebemasse und mindestens einer aktivierbaren Klebemasse mit einer komplexen Viskosität größer 10⁵ Pas, gemessen nach ISO 6721-10 bei 23 °C und einer Frequenz von 1 rad/s,
(ii) mindestens eine Deckschicht, vorzugsweise eine temporäre Abdeckschicht, insbesondere ein Liner, bevorzugt umfassend mindestens einen Träger, wie Papier, Vlies oder Folie. Besonders bevorzugt ist der Träger eine Folie aus einem biaxial verstreckten Polyethylenterephthalat, Polybuten, Polypropylen, Polyethylen, monoaxial verstreckten Polypropylen, biaxial verstreckten Polypropylen oder Polyethylen, vorzugsweise Polyolefinfolien (Polypropylen- und Polyethylenfolien) oder Polyesterfolien, und
(iii) mindestens eine zumindest teilflächig vorhandene spaltbare Verklebungsschicht, insbesondere mit einer komplexen Viskosität kleiner gleich 10⁵ Pas, gemessen nach ISO 6721-10 bei 23 °C und einer Frequenz von 1 rad/s umfassend mindestens einen abbindbaren Flüssigklebstoff,
wobei die mindestens eine Verklebungsschicht zwischen der mindestens einen (i) Trägerschicht und (ii) der mindestens einen Deckschicht angeordnet ist.

Als Schicht im Sinne der Erfindung wird eine flächenförmige Anordnung eines Systems einheitlicher Funktionalität bezeichnet, deren Abmessungen in einer Raumrichtung, wie Dicke oder Höhe, signifikant kleiner sind als in den beiden anderen Raumrichtungen, wie Länge oder Breite, welche die Hauptausdehnung einer Schicht definieren. Eine derartige Schicht kann kompakt oder auch durchbrochen ausgebildet sein und aus einem einzigen Material oder aus unterschiedlichen Materialien bestehen, insbesondere wenn diese zur einheitlichen Funktionalität dieser Schicht beitragen. Eine Schicht kann eine über ihre gesamte Flächenausdehnung konstante Dicke innerhalb eines Schwankungsbereiches mit einer Standardabweichung von bis zu plus/minus kleiner gleich 5 % aufweisen oder aber unterschiedliche Dicken. Darüber hinaus kann eine Schicht natürlich auch mehr als eine einzige Funktionalität aufweisen. Insbesondere können mehrere unterschiedliche Schichten nebeneinander und/oder aufeinander angeordnet sein und sich zu einer großen Schicht zusammenfügen. Dies gilt sowohl für die im erfindungsgemäßen Verfahren eingesetzte spaltbare und/oder gespaltene Verklebungsschicht, welche jeweils mindestens einen Flüssigklebstoff umfasst sowie für die im Klebebandabschnitt enthaltene Trägerschicht. Somit kann gemäß Definition die mindestens eine Verklebungsschicht aus mehreren Teilschichten nebeneinander und/oder aufeinander aufgebaut sein. Bevorzugt sind diese nebeneinander angeordnet und fügen sich zu einer Verklebungsschicht zusammen. In einer besonderen Ausführungsform kann die im erfindungsgemäßen Verfahren verklebte Verklebungsschicht alternativ oder zusätzlich aus mehreren, insbesondere verschiedenen, Schichten variabler Flüssigklebstoffe aufgebaut sein, wobei diese übereinander angeordnet sind. Die unterschiedlichen Flüssigklebstoffschichten können im direkten Kontakt aneinander anliegen oder aber insbesondere in der mindestens einen Verklebungsschicht mit Zwischenschichten getrennt voneinander.

Ein Flüssigklebstoff umfasst zumindest eine abbindbare Komponente. Darüber hinaus können weitere Komponenten enthalten sein, zum Beispiel weitere abbindbare Komponenten, Polymere, Lösungs- oder Dispergiermittel, Initiatoren, Vernetzer, Härter, Beschleuniger, Katalysatoren, Weichmacher, Harze, Wachse, Tackifier, Füllstoffe, Stabilisatoren, Antioxidantien, Entlüfer, Entschäumer, Emulgatoren, Schutzkolloide, Haftvermittler und/oder Primer. Komponenten von Flüssigklebstoffen sind zum Beispiel in Habenicht: Kleben 6. Auflage, 2009, Berlin, Springer, ausführlich beschrieben.

Bevorzugt weist (iii) die mindestens eine Verklebungsschicht eine komplexe Viskosität, gemäß obiger Definition, kleiner gleich 1000 Pas, besonders bevorzugt kleiner gleich 500 Pas auf und insbesondere kleiner gleich 200 Pas, bevorzugt kleiner gleich 10 Pas. Eine Viskosität kleiner gleich 1000 Pas, insbesondere kleiner gleich 10 Pas ist besonders bevorzugt, da bei höheren Viskositäten das Spalten der Verklebungsschicht weniger zuverlässig ist. Eine Viskosität größer gleich 100 mPas, insbesondere größer gleich 1 Pas ist besonders bevorzugt, da bei niedrigeren Viskositäten die Gefahr besteht, dass die Verklebungsschicht aus dem Schichtverbund ausläuft. Bevorzugte Bereiche sind größer gleich 0,1 Pas bis kleiner gleich 10 Pas, größer gleich 1 Pas bis kleiner 100 Pas, größer gleich 10 Pas bis kleiner gleich 100 Pas, größer gleich 1 Pas bis kleiner gleich 10 Pas.

In dem erfindungsgemäßen Verfahren wird bevorzugt ein Klebebandabschnitt verklebt, worin (i) die mindestens eine Trägerschicht umfasst
a) mindestens eine Haftklebemasse, (zum Beispiel Tabelle 1, T3; Tabelle 2 und 3, Muster K11), insbesondere umfassend eine Haftklebemasse enthaltend mindestens ein Polymer basierend auf mindestens einem Vinyl-Monomer und mindestens einem Dien-Monomer, wobei Dien-Monomere ausgewählt werden aus Acrylat, Methacrylat, Isopren, Isoprenderivaten und Vinyl-Monomere ausgewählt werden aus aromatischen Vinylen, bevorzugt Styrol, bevorzugt sind Copolymere aus mindestens zwei der vorgenannten Monomeren, besonders bevorzugt aus Styrol und Isopren, oder
b) ein Gemisch aus mindestens einer Haftklebemasse und mindestens einem Flüssigklebstoff (zum Beispiel Tabelle 1, T1 und T2, Muster K1 bis K8, K10),
c) mindestens einer aktivierbaren Klebemasse mit einer komplexen Viskosität größer gleich 100000 Pas, gemessen nach ISO 6721-10 bei 23 °C und einer Frequenz von 1 rad/s, die insbesondere bei 23 °C in einem festen Aggregatzustand vorliegt, oder
d) eine zweite Deckschicht, insbesondere eine temporäre Abdeckschicht, vorzugsweise ein Liner, besonders bevorzugt eine PET-Folie.

Die Dicke der mindestens einen Trägerschicht entspricht den im Bereich der Klebebänder üblichen Dicken in einem Bereich von größer gleich 1 µm bis kleiner gleich 3000 µm, vorzugsweise größer gleich 10 µm bis kleiner gleich 250 µm, größer gleich 10 µm bis kleiner gleich 200 µm, größer gleich 15 µm bis kleiner gleich 200 µm, größer gleich 15 µm bis kleiner gleich 150 µm, vorzugsweise größer gleich 15 µm bis kleiner gleich 100 µm.

Somit ist ein weiterer Gegenstand der vorliegenden Erfindung ein Verfahren zur Verklebung eines beidseitig klebenden, insbesondere spaltbaren, Klebebandabschnitts umfassend (i) mindestens eine aktivierbare Klebemasse in Form einer Trägerschicht, (ii) mindestens eine Deckschicht und (iii) mindestens die hierin beschriebene spaltbare Verklebungsschicht. Der beidseitig klebende Klebebandabschnitt wird erfindungsgemäß in einem Schritt des Verfahrens zur einen Seite durch die mindestens eine Verklebungsschicht und in einem weiteren Schritt zur zweiten Seite durch die aktivierbare Klebemasse verklebt. Alternativ kann auf beiden Seiten der mindestens einen Trägerschicht, umfassend mindestens eine aktivierbare Klebemasse, jeweils eine spaltbare Verklebungsschicht vorliegen. In dieser Ausführungsform dient die aktivierbare Klebemasse als Träger ohne mit einer Oberfläche eines Substrates in direkten Kontakt zu treten.

Als aktivierbare Klebemasse können grundsätzlich alle üblichen aktiviert verklebenden Klebemassesysteme zum Einsatz gelangen. Die Aktivierung erfolgt in der Regel über einen Energieeintrag, zum Beispiel durch aktinische Strahlung oder Wärme. Hitzeaktiviert verklebende Klebemassen lassen sich grundsätzlich in zwei Kategorien einordnen: thermoplastische hitzeaktiviert verklebende Klebemassen (Schmelzklebstoffe) und reaktive hitzeaktiviert verklebende Klebemassen (Reaktivklebstoffe). Diese Einteilung enthält auch solche Klebemassen, die sich beiden Kategorien zuordnen lassen, nämlich reaktive thermoplastische hitzeaktiviert verklebende Klebemassen (reaktive Schmelzklebstoffe). Thermoplastische Klebemassen basieren auf Polymeren, die bei einem Erwärmen reversibel erweichen und während des Erkaltens wieder erstarren. Als thermoplastische Klebemassen haben sich insbesondere solche auf der Basis von Polyolefinen und Copolymeren von Polyolefinen sowie von deren säuremodifizierten Derivaten, von Ionomeren, von thermoplastischen Polyurethanen, von Polyamiden sowie Polyestern und deren Copolymeren und auch von Blockcopolymeren, wie StyrolBlockcopolymeren als vorteilhaft herausgestellt.

Im Gegensatz dazu enthalten reaktive, hitzeaktiviert verklebende, Klebemassen reaktive Komponenten. Letztere Bestandteile werden auch als "Reaktivharze" bezeichnet, in denen durch das Erwärmen ein Vernetzungsprozess eingeleitet wird, der nach Beenden der Vernetzungsreaktion eine dauerhafte stabile Verbindung gewährleistet. Bevorzugt enthalten derartige Klebemassen auch elastische Komponenten, zum Beispiel synthetische Nitrilkautschuke oder Styrolblockcopolymere. Derartige elastische Komponenten verleihen der hitzeaktiviert verklebenden Klebemasse infolge ihrer hohen Fließviskosität eine auch unter Druck besonders hohe Dimensionsstabilität. Somit wird ein Gemisch aus mindestens einer aktivierbaren Klebemasse und mindestens einem Flüssigklebstoff, insbesondere Reaktivharz, im Sinne der Erfindung ebenfalls als (i) Trägerschicht eingesetzt.

Strahlungsaktivierte Klebemassen basieren ebenfalls auf reaktiven Komponenten. Letztere Bestandteile können zum Beispiel Polymere oder Reaktivharze umfassen, in denen durch die Bestrahlung ein Vernetzungsprozess eingeleitet wird, der nach Beenden der Vernetzungsreaktion eine dauerhafte stabile Verbindung gewährleistet. Bevorzugt enthalten derartige Klebemassen auch elastische Komponenten, wie sie oben ausgeführt sind.

Besonders bevorzugt sind reaktive aktivierbare Klebemassen in der Kombination mit chemisch härtendem Flüssigklebstoff, da diese im erfindungsgemäßen Verfahren gleichzeitig aktiviert werden können und damit chemische Bindungen zwischen diesen Schichten entstehen können, die einen besonders guten Schichtverbund herstellen. In einer bevorzugten Ausführung enthält die reaktive aktivierbare Klebemasse Reaktivharze oder reaktive Polymere aus der gleichen oder einer ähnlichen Klasse wie die Verklebungsschicht.

Die Trägerschicht kann eine Klebemassenschicht sein.

Trägerschichten sind im Sinne der Erfindung auch insbesondere d) alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-)elektronischen Anordnung), Mehrschichtanordnungen und dergleichen. Dabei sind für verschiedene Anwendungen unterschiedlichste Träger, wie zum Beispiel Folien, textile Flächengebilde, wie etwa Gewebe oder Vliese und Papiere mit verschiedenen Klebstoffen kombinierbar und im erfindungsgemäßen Verfahren zum Abziehen von der Verklebungsschicht gut geeignet.

In einer besonderen Ausführung des erfindungsgemäßen Verfahrens werden bevorzugt Klebebandabschnitte verklebt, welche als Trägerschichten d) Folien, bevorzugt Polymerfolien, oder Folienverbunde enthalten. Folien weisen eine geringe Rauheit der Oberfläche auf, was vorteilhaft für eine gleichmäßige Schichtdicke einer Verklebungsschicht ist, insbesondere nach dem Spalten und Dosieren. Derartige Folien/Folienverbunde können aus allen gängigen zur Folienherstellung verwendeten Kunststoffen bestehen, beispielhaft aber nicht einschränkend erwähnt seien:
Polyethylen, Polypropylen - insbesondere das durch mono-oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polymethylmethacrylat (PMMA), Polyamid (PA), Polyethersulfon (PES) oder Polyimid (PI). Auch Verbunde mit Metallfolien oder reine Metallfolien sind bevorzugt.

Die im erfindungsgemäßen Verfahren bevorzugt verklebten Klebebandabschnitte umfassen als Trägerschicht, insbesondere die vorbeschriebenen Folien, welche zudem mit organischen oder anorganischen Beschichtungen oder Schichten kombiniert sein können. Dies kann durch übliche Verfahren wie zum Beispiel Lackieren, Drucken, Bedampfen, Sputtern, Co-Extrusion oder Lamination geschehen. Beispielhaft, aber nicht einschränkend erwähnt seien hier etwa Oxide oder Nitride des Siliziums und des Aluminiums, Indium-Zinn-Oxid (ITO) oder Sol-Gel-Beschichtungen.

In einer besonderen Ausführung ist die mindestens eine Trägerschicht des Klebebandabschnitts d) ein zweiter Liner, vorzugsweise ist der zweite Liner eine Folie. Besonders bevorzugt ist die Folie ausgewählt aus Folien umfassend ein biaxial verstrecktes Polyethylenterephthalat, Polybuten, Polypropylen, Polyethylen, monoaxial verstrecktes Polypropylen, biaxial verstrecktes Polypropylen oder Polyethylen, vorzugsweise Polyolefinfolien (Polypropylen- und Polyethylenfolien) oder Polyesterfolien.

Bevorzugt wird in dem erfindungsgemäßen Verfahren ein Klebebandabschnitt, insbesondere Verklebungsschicht, verklebt, worin (iii) die mindestens eine spaltbare Verklebungsschicht durch Austreten erhältlich ist, insbesondere Diffusion, des mindestens einen Flüssigklebstoffs aus (i) der mindestens einen Trägerschicht (zum Beispiel Tabelle 1, T2) umfassend ein Gemisch aus mindestens einem Trägerschichtmaterial, insbesondere einer Haftklebemasse, und mindestens einem Flüssigklebstoff (Beispiele, Tabelle 2, Muster K10). Insbesondere erfolgt das Austreten beziehungsweise das Ablagern des mindestens einen Flüssigklebstoffs während der Lagerung des Klebebandes oder Klebebandabschnitts, vorzugsweise über einen Zeitraum von vorzugsweise größer gleich 24 Stunden bei Raumtemperatur, insbesondere bei größer gleich 19 °C bis kleiner gleich 25 °C, vorzugsweise 23 °C. Während der Lagerung des Klebebandes oder Klebebandabschnitts, insbesondere innerhalb größer gleich 24 Stunden bis kleiner gleich 3 Tagen, kann der mindestens eine Flüssigklebstoff zumindest teilflächig zu einem Anteil von vorzugsweise größer gleich 0,50 Gew.-% austreten, vorzugsweise größer gleich 5 Gew.-%, größer gleich 10 Gew.-%, größer gleich 20 Gew.-%, besonders bevorzugt größer gleich 50 Gew.-%, jeweils bezogen auf den Anteil des mindestens einen Flüssigklebstoffs in (i) der mindestens einen Trägerschicht.

Als Haftklebemassen werden Klebemassen bezeichnet, die bereits unter relativ schwachem Andruck, insbesondere mittels einer Walze, eine dauerhafte Verbindung mit dem Haftgrund, insbesondere einem Substrat, erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds, insbesondere Substrats, bereits bei geringem Andruck benetzen, wie im erfindungsgemäßen Verfahren. Die Verklebbarkeit der Klebemassen beruht auf ihren adhäsiven Eigenschaften und die Wiederablösbarkeit auf ihren kohäsiven Eigenschaften. Als Basis für Haftklebemassen in zur Verklebung im erfindungsgemäßen Verfahren geeigneten Klebebandabschnitten kommen verschiedene Verbindungen in Frage.

Im erfindungsgemäßen Verfahren wird bevorzugt ein erfindungsgemäßer Klebebandabschnitt verklebt, worin die (i) mindestens eine Trägerschicht mindestens eine Haftklebemasse enthält, insbesondere allein oder in einem Gemisch mit mindestens einem Flüssigklebstoff, welche mindestens eine Verbindung umfasst auf Basis von Acrylaten, (Meth)acrylaten, Polyurethanen, Naturkautschuken, Synthesekautschuken, Styrolblockcopolymeren, Styrolblockcopolymeren mit einem Elastomerblock aus ungesättigten oder hydrierten Polydienblöcken, Polyolefinen, Polyestern, Fluorpolymeren und/oder Silikonen und/oder Mischungen aus mindestens zwei der genannten Verbindungen.

Haftklebemassen, wie sie (i) als Trägerschicht alleine oder in einem Gemisch mit mindestens einem Flüssigklebstoff in zur erfindungsgemäßen Verklebung geeigneten Klebebandabschnitten eingesetzt werden, umfassen ebenfalls Elastomere, wie sie im "Handbook of Pressure Sensitive Adhesive Technology" von Donatas Satas (Satas & Associates, Warwick 1-999) beschrieben sind. Insbesondere umfassen Elastomere Verbindungen auf Basis von Acrylaten und/oder Methacrylaten, Polyurethanen, Naturkautschuken, Synthesekautschuken, wie Butyl-, (Iso)Butyl-, Nitril- oder Butadienkautschuke, Styrolblockcopolymeren mit einem Elastomerblock aus ungesättigten oder teilweise oder vollständig hydrierten Polydienblöcken (Polybutadien, Polyisopren, Poly(iso)butylen, Copolymeren aus diesen sowie weitere, dem Fachmann geläufige Elastomerblöcke), Polyolefinen, Fluorpolymeren und/oder Silikonen. Wird Kautschuk oder Synthesekautschuk oder daraus erzeugte Verschnitte als Basismaterial für die Haftklebemasse eingesetzt, dann kann der Naturkautschuk grundsätzlich aus allen erhältlichen Qualitäten gewählt werden, wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) oder der Polyurethane und/oder deren Verschnitten. Diese Elastomere haben gemäß einer bevorzugten Ausführungsform der Erfindung eine Molmasse, die größer ist als ihre 5-fache, vorzugsweise 25-fache Entanglementmolmasse.

Im Rahmen der vorliegenden Erfindung bedeutet "Auf der Basis von", dass die Eigenschaften der Polymermischung zumindest stark von den grundlegenden Eigenschaften dieses Polymers (dem sogenannten "Basispolymer") bestimmt werden, wobei selbstverständlich nicht ausgeschlossen ist, dass diese durch Verwendung von modifizierenden Hilfs- oder Zusatzstoffen oder von weiteren Polymeren in der Zusammensetzung zusätzlich beeinflusst werden. Insbesondere kann dies bedeuten, dass der Anteil des Basispolymers an der Gesamtmasse der elastomeren Phase mehr als 50 Gew.-% beträgt. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen, wobei die Aufzählung der Additive nur beispielhaft und nicht einschränkend zu verstehen ist. Weitere Zusätze für Zusammensetzungen von Haftklebemassen sowie aktivierbaren Klebemassen sind dem Fachmann bekannt und umfassen unter anderem geeignete Photoinitiatoren, rheologische Additive und andere bekannte technische Additive.

Das Polymer kann von linearer, verzweigter, sternförmiger oder gepfropfter Struktur sein, um nur einige Beispiele zu geben, und als Homopolymer, als statistisches Copolymer, als alternierendes oder als Blockcopolymere aufgebaut sein. Die Bezeichnung "statistisches Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten in den Polymerketten vorkommen. Einzelne Polymerblöcke können als Copolymerblock (statistisch oder alternierend) aufgebaut sein.

Die vorbeschriebenen Haftklebemassen werden bevorzugt allein (siehe Tabelle 1, T3) oder in Kombination als Gemisch mit mindestens einem Flüssigklebstoff (siehe Tabelle 1, T1 und T2) als (i) Trägerschichten eingesetzt, wobei bevorzugt der mindestens eine Flüssigklebstoff während der Lagerung austritt, insbesondere an die Grenzfläche zwischen (i) Trägerschicht und (ii) Deckschicht, und so (iii) eine Verklebungsschicht zwischen (i) Trägerschicht und (ii) Deckschicht bildet. Für das erfindungsgemäße Verfahren ist diese Ausführungsform vorteilhaft, da der mindestens eine Flüssigklebstoff eine hohe Affinität zur Deckschicht, vorzugsweise zum Liner, aufweist. Die Bildung der Verklebungsschicht und das Spalten der Verklebungsschicht werden dadurch positiv beeinflusst. Der Flüssigklebstoff kann aber auch in der Haftklebemasse verbleiben, etwa wenn zumindest eine separate Verklebungsschicht umfassend zumindest einen Flüssigklebstoff aufgebracht ist.

Für das erfindungsgemäße Verfahren ist eine (i) Trägerschicht bevorzugt, welche umfasst b) ein Gemisch aus mindestens einer Haftklebemasse enthaltend mindestens ein Polymer basierend auf mindestens einem Vinyl-Monomer und mindestens einem Dien-Monomer, wobei Dien-Monomere ausgewählt werden aus Acrylat, Methacrylat, Isopren, Isoprenderivate und Vinyl-Monomere ausgewählt werden aus aromatischen Vinylen, bevorzugt Styrol, bevorzugt sind Copolymere aus mindestens zwei der vorgenannten Monomeren, besonders bevorzugt aus Styrol und Isopren, und mindestens einem Flüssigklebstoff, wobei der mindestens eine Flüssigklebstoff umfasst Vinylacetat, Polyvinylalkohol, Polyvinylacetal, Polyvinylchlorid, (Meth-) Acrylat, Polyamid sowie Copolymeren aus mindestens zwei der vorgenannten Verbindungen, Cellulose, Harnstoff, Melaminharz, Phenolharz, Epoxid, Polyurethan, Polyester, Polyaromat, Chloropren, Nitril-Kautschuk, Styrol, Butylkautschuk, Polysulfid und/oder Silikon oder Mischungen aus mindestens zwei der genannten Verbindungen. Besonders bevorzugt umfasst das Gemisch mindestens ein Epoxidharz.

Bevorzugt wird im erfindungsgemäßen Verfahren ein Klebebandabschnitt der oben beschriebene Ausführungsform verklebt, wobei besonders bevorzugt (i) als Trägerschicht eine Haftklebemasse eingesetzt wird, welche bevorzugt die Komponenten umfasst mindestens ein Copolymer basierend auf Vinyl- und Dien-Monomeren, vorzugsweise Styrol und Isopren, besonders bevorzugt ein Polystyrol-block-Polyisobutylen-Blockcopolymer, mindestens ein Klebharz, vorzugsweise ein vollhydriertes Kohlenwasserstoffharz, und mindestens ein Flüssigklebstoff, bevorzugt ein Reaktivharz, vorzugsweise ein Epoxidharz, besonders bevorzugt ein cycloaliphatisches Epoxidharz. Bevorzugt ist (i) eine Trägerschicht umfassend eine Haftklebemasse, vorzugsweise ein Polystyrol-block-Polyisobutylen-Blockcopolymer, ein cycloaliphatisches Diepoxid, ein vollhydriertes Kohlenwasserstoffharz und einen kationischen Fotoinitiator (Tabelle 1). In einer besonderen Ausführungsform umfasst (i) die mindestens eine Trägerschicht eine Haftklebemasse, vorzugsweise ein Polystyrol-Block-Polyisobutylen-Blockcopolymer, mindestens einen Flüssigklebstoff ausgewählt aus einem cycloaliphatisches Diepoxid, ein vollhydriertes Kohlenwasserstoffharz und einen kationischen Fotoinitiator (siehe Tabelle 1).

Bevorzugt wird in dem erfindungsgemäßen Verfahren ein Klebebandabschnitt verklebt umfassend mindestens eine (iii) Verklebungsschicht, und optional (i) eine Trägerschicht, worin der mindestens eine Flüssigklebstoff umfasst Vinylacetat, Polyvinylalkohol, Polyvinylacetal, Polyvinylchlorid, (Meth-)acrylat, Polyamid sowie Copolymeren aus mindestens zwei der vorgenannten Verbindungen, Cellulose, Harnstoff, Melaminharz, Phenolharz, Epoxide, Polyurethan, Polyester, Polyaromat, Chloropren, Nitril-Kautschuk, Styrol, Butylkautschuk, Polysulfid und/oder Silikon oder Mischungen aus mindestens zwei der genannten Verbindungen.

Insbesondere werden Reaktivharze als Flüssigklebstoffe eingesetzt, wie Reaktivharze auf Basis eines Acrylats und/oder Methacrylats für die strahlenchemische und gegebenenfalls thermische Vernetzung mit einer Erweichungstemperatur von kleiner gleich 40 °C, bevorzugt kleiner gleich 20 °C. Bei den Reaktivharzen auf Basis von Acrylaten oder Methacrylaten handelt es sich insbesondere um aromatische oder insbesondere aliphatische oder cycloaliphatische Acrylate oder Methacrylate. Geeignete Reaktivharze tragen zumindest eine (Meth)acrylat-Funktion, bevorzugt zumindest zwei (Meth)acrylat-Funktionen. Weitere Verbindungen mit zumindest einer (Meth)acrylat-Funktion, bevorzugt höherer (Meth)acrylat-Funktionalität, können ebenfalls eingesetzt werden.

Reaktivharze auf Basis von Acrylat und/oder Methacrylat umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Butylmethacrylat, n-Pentylacrylat, n-Pentylmethacrylat, n-Hexylacrylat, n-Hexylmethacrylat, n-Heptylacrylat, n-Heptylmethacrylat, n-Octylacrylat, n-Octylmethacrylat, n-Nonylacrylat, n-Nonylmethacrylat, Laurylacrylat, Laurylmethacrylat, Hexadecylacrylat, Hexadecylmethacrylat, Stearylacrylat, Stearylmethacrylat, Behenylacrylat, Behenylmethacrylat, deren jeweilige verzweigte Isomere wie zum Beispiel 2-Ethylhexylacrylat, 2-Ethylhexylmethacrylat, iso-Octylacrylat, iso-Octylmethacrylat, iso-Decylacrylat, iso-Decylmethacrylat, Tridecylacrylat, Tridecylmethacrylat sowie cyclische Monomere wie zum Beispiel Cyclohexylacrylat, Cyclohexylmethacrylat, Tetrahydrofurfurylacrylat, Tetrahydrofurfurylmethacrylat, Dihydrodicyclopentadienylacrylat, Dihydrodicyclopendadienylmethacrylat, 4-tert-Butylcyclohexylacrylat, 4-tert-Butylcyclohexylmethacrylat, Norbornylacrylat, Norbornylmethacrylat, Isobornylacrylat und Isobornylmethacrylat.

Weiterhin einsetzbar sind Acryloylmorpholin, Methacryloylmorpholin, Trimethylolpropanformalmonoacrylat, Trimethylolpropanformalmonomethacrylat, propoxyliertes Neopentylmethylethermonoacrylat, propoxyliertes Neopentylmethylethermonomethacrylat, Tripropylenglykolmethylethermonoacrylat, Tripropylenglykolmethylethermonomethacrylat, ethoxyliertes Ethylacrylat, wie Ethyldiglykolacrylat, ethoxyliertes Ethylmethacrylat wie Ethyldiglykolmethacrylat, propoxyliertes Propylacrylat und propoxyliertes Propylmethacrylat.

Ebenfalls einsetzbar als Reaktivharze sind Acryl- und Methacrylsäureester, die aromatische Reste enthalten, wie zum Beispiel Phenylacrylat, Benzylacrylat, Phenylmethacrylat, Benzylmethacrylat, Phenoxyethylacrylat, Phenoxyethylmethacrylat, ethoxyliertes Phenolacrylat, ethoxyliertes Phenolmethacrylat, ethoxyliertes Nonylphenolacrylat oder ethoxyliertes Nonylphenolmethacrylat.

Weiterhin können aliphatische oder aromatische insbesondere ethoxylierte oder propoxylierte Polyethermono(meth)acrylate, aliphatische oder aromatische Polyester-mono(meth)acrylate, aliphatische oder aromatische Urethanmono(meth)acrylate oder aliphatische oder aromatische Epoxymono(meth)acrylate als Verbindungen, die eine (Meth)acrylat-Funktion tragen, eingesetzt werden.

Bevorzugt werden im erfindungsgemäßen Verfahren Klebebandabschnitte verklebt, welche in der Verklebungsschicht als Flüssigharze Verbindungen enthalten, die zumindest zwei (Meth)acrylat-Funktionen tragen, eine oder mehrere Verbindungen aus der Liste umfassend difunktionelle aliphatische (Meth)acrylate wie 1,3-Propandioldi(meth)acrylat, 1,4-Butandioldi(meth)acrylat, 1,6-Hexandioldi(meth)acrylat, 1,5-Neopentyldi(meth)acrylat, Dipropylenglykoldi(meth)acrylat, Tricyclodecandimethyloldi(meth)acrylat, Cyclohexandimethanoldi(meth)acrylat, trifunktionelle aliphatische (Meth)acrylate wie Trimethylolpropantri(meth)acrylat, tetrafunktionelle aliphatische (Meth)acrylate wie Ditrimethylolpropantetra(meth)acrylat oder Ditrimethylolpropantetra(meth)acrylat, pentafunktionelle aliphatische (Meth)acrylate wie Dipentaerythritolmonohydroxypenta(meth)acrylat, hexafunktionelle aliphatische (Meth)acrylate wie Dipentaerythritolhexa(meth)acrylat. Ferner, wenn höherfunktionalisierte Verbindungen eingesetzt werden, können aliphatische oder aromatische, insbesondere ethoxylierte und propoxylierte Polyether(meth)acrylate, mit insbesondere zwei, drei, vier oder sechs (Meth)acrylat-Funktionen genutzt werden wie ethoxyliertes Bisphenol A Di(meth)acrylat, Polyethylenglykoldi(meth)acrylat, propoxyliertes Trimethylol-propantri(meth)acrylat, propoxyliertes Glyceroltri(meth)acrylat, propoxyliertes Neopentyl-glyceroldi(meth)acrylat, ethoxyliertes Trimethyloltri(meth)acrylat, ethoxyliertes Trimethylol-propandi(meth)acrylat, ethoxyliertes Trimethylolpropantri(meth)acrylat, Tetraethylenglykoldi(meth)acrylat, ethoxyliertes Neopentylglykoldi(meth)acrylat, propoxyliertes Pentaerythritol-tri(meth)acrylat, Dipropylenglykoldi(meth)acrylat, ethoxyliertes Trimethylolpropan-methyletherdi(meth)acrylat, aliphatische oder aromatische Polyester(meth)acrylate mit insbesondere zwei, drei, vier oder sechs (Meth)acrylat-Funktionen, aliphatische oder aromatische Urethan(meth)acrylate mit insbesondere zwei, drei, vier oder sechs (Meth)acrylat-Funktionen, aliphatische oder aromatische Epoxy(meth)acrylate mit insbesondere zwei, drei, vier oder sechs (Meth)acrylat-Funktionen.

Bevorzugt werden im erfindungsgemäßen Verfahren Klebebandabschnitte verklebt, welche in der Verklebungsschicht als Flüssigklebstoff Reaktivharze auf Basis cyclischer Ether, insbesondere Epoxide, also Verbindungen, die zumindest eine Oxiran-Gruppe tragen, oder Oxetane. Sie können aromatischer oder insbesondere aliphatischer oder cycloaliphatischer Natur sein. Einsetzbare Reaktivharze können monofunktionell, difunktionell, trifunktionell, tetrafunktionell oder höher funktionell bis zu polyfunktionell gestaltet sein, wobei sich die Funktionalität auf die cyclische Ethergruppe bezieht.

Beispiele, ohne sich einschränken zu wollen, sind 3,4-Epoxycyclohexylmethyl-3',4'-epoxycyclohexancarboxylat (EEC) und Derivate, Dicyclopendadiendioxid und Derivate, 3-Ethyl-3-oxetanmethanol und Derivate, Tetrahydrophthalsäurediglycidylester und Derivate, Hexahydrophthalsäurediglycidylester und Derivate, 1,2-Ethandiglycidylether und Derivate, 1,3-Propandiglycidylether und Derivate, 1,4-Butandioldiglycidylether und Derivate, höhere 1,n-Alkandiglycidylether und Derivate, Bis-[(3,4-epoxycyclohexyl)methyl]-adipat und Derivate, Vinylcyclohexyldioxid und Derivate, 1,4-Cyclohexandimethanol-bis-(3,4-epoxycyclohexancarboxylat) und Derivate, 4,5-Epoxytetrahydrophthalsäurediglycidylester und Derivate, Bis-[1-ethyl(3-oxetanyl)methyl)ether und Derivate, Pentaerythritoltetraglycidylether und Derivate, Bisphenol-A-Digylcidylether (DGEBA), hydriertes Bisphenol-A-Diglycidylether, Bisphenol-F-Diglycidylether, hydriertes Bisphenol-F-Diglycidylether, Epoxyphenol-Novolaks, hydrierte Epoxyphenol-Novolaks, Epoxycresol-Novolaks, hydrierte Epoxycresol-Novolaks, 2-(7-Oxabicyclospiro(1,3-dioxan-5,3'-(7oxabicyclo[4.1.0]-heptan)), 1,4-Bis((2,3-epoxypropoxy)methyl)cyclohexan.

Reaktivharze können in ihrer monomeren oder auch dimeren, trimeren, usw. bis hin zu ihrer oligomeren Form eingesetzt werden.

Gemische von Reaktivharzen untereinander aber auch mit anderen coreaktiven Verbindungen, wie Alkoholen (monofunktionell oder mehrfach funktionell) oder Vinylethern (monofunktionell oder mehrfach funktionell) sind ebenfalls möglich. Bevorzugte Flüssigklebstoffe basieren auf Epoxiden, besonders bevorzugte Reaktivharze sind Diepoxide, insbesondere cycloalipahtische Diepoxide (zum Beispiel Uvacure 1500).

Die vorbeschriebenen als Flüssigklebstoff geeigneten Verbindungen sind bei einer Temperatur von größer gleich 19 °C bis kleiner gleich 23 °C flüssig oder pastös und weisen bei diesen Temperaturen Fließfähigkeit auf. Insbesondere in einem Gemisch in Kombination mit mindestens einer Haftklebemasse oder aktivierbaren Klebemasse, können die vorbeschriebenen Flüssigklebstoffe aus (i) der Trägerschicht gut austreten und (iii) die Verklebungsschicht ausbilden, welche im erfindungsgemäßen Verfahren sehr gut gespalten wird. Die Fließfähigkeit wird nachfolgend durch den Verlustfaktor tan delta und/oder alternativ durch die komplexe Viskosität ausgedrückt und beschrieben.

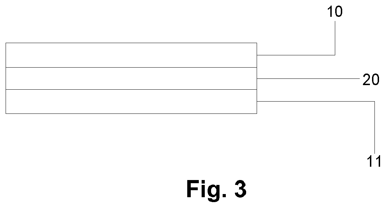

Ein weiterer Gegenstand der vorliegenden Erfindung ist die Verklebung eines Klebebandabschnitts (Fig. 1, Fig. 3) umfassend (iii) mindestens eine Verklebungsschicht enthaltend mindestens einen Flüssigklebstoff, der einen Verlustfaktor tan delta (Quotient Verlustmodul G"/ Speichermodul G') von größer gleich 2 aufweist, vorzugsweise größer gleich 3, größer gleich 4 besonders bevorzugt größer gleich 5. Ein höherer Verlustfaktor ist bevorzugt, da mit steigendem tan δ die Spaltung der Verklebungsschicht leichter herbeigeführt werden kann.

Besonders bevorzugt wird im erfindungsgemäßen Verfahren ein Klebebandabschnitt, insbesondere eine Verklebungsschicht, gespalten und verklebt, worin in einer besonderen Ausführungsform (iii) die mindestens eine Verklebungsschicht in Form einer Schicht vorliegt, welche insbesondere mindestens eines Flüssigklebstoffs mit einem thixotropen oder strukturviskosen Fließverhalten aufweist mit einer Nullviskosität von kleiner gleich 1000 Pas aufweist. Die Nullviskosität wird durch Extrapolation von Messungen der komplexen Viskosität nach ISO 6721-10 bei 23 °C bei verschiedenen Frequenzen für eine Schergeschwindigkeit von Null abgeleitet. Bei mindestens zwei Verklebungsschichten kann die jeweilige Verklebungsschicht jeweils mindestens einen Flüssigklebstoff mit gleichem Fließverhalten oder eine Kombination aus mindestens zwei Flüssigklebstoffen mit unterschiedlichem Fließverhalten aufweisen. Insbesondere können Flüssigklebstoffgemische unterschiedlicher Flüssigklebstoffe eingesetzt werden.

Der Vorteil eines Flüssigklebstoffs mit strukturviskosem Fließverhalten ist die erleichterte Lagerung, da der Klebstoff im Ruhezustand eine höhere Viskosität aufweist und damit in Ruhe die Gefahr des Austretens des Flüssigklebstoffs aus dem Verbund, insbesondere aus dem zur erfindungsgemäßen Verklebung geeigneten Klebebandabschnitt, geringer ist. Aufgrund der Viskositätserniedrigung unter Scherung oder Dehnung lässt sich eine solche Verklebungsschicht trotz höherer Ruheviskosität (Nullviskosität) im erfindungsgemäßen Verfahren noch leicht spalten.

Der Vorteil eines Flüssigklebstoffs mit thixotropem Fließverhalten ist die erleichterte Lagerung, da der Klebstoff im Ruhezustand eine höhere Viskosität aufweist. Vor dem Spalten versetzt man den Klebstoff durch Einbringen von mechanischer Energie, zum Beispiel von Schwingungen, in einen niedrigerviskosen Zustand, welcher durch die Thixotropie zunächst beibehalten wird, so dass das Spalten erleichtert wird.

Auch ein Flüssigklebstoff mit dilatantem Fließverhalten kann vorteilhaft sein, da ein solcher Flüssigklebstoff bei der Lagerung unter Druck, zum Beispiel dem Wickeldruck in einer Klebebandrolle, weniger leicht ausfließt. Bei einem dilatanten Flüssigklebstoff ist bevorzugt die Nullviskosität unterhalb von 100 Pas, da anderenfalls die im erfindungsgemäßen Verfahren erforderliche Spaltkräfte zu hoch werden können.

Im erfindungsgemäßen Verfahren wird ebenfalls ein Klebebandabschnitt verklebt, welcher in einer besonderen Ausführungsform (iii) mindestens eine Verklebungsschicht mit zwei Schichten umfasst, welche jeweils mindestens einen Flüssigklebstoff mit entgegen gerichteten Fließverhalten aufweist. Somit umfasst diese Ausführungsform eine Verklebungsschicht umfassend eine Schicht mindestens eines strukturviskosen Flüssigklebstoffs und eine Schicht mindestens eines dilatanten Flüssigklebstoffs. Dies hat den Vorteil, dass bei einer ersten Spaltung im erfindungsgemäßen Verfahren die resultierende gespaltene Verklebungsschicht umfassend den gespaltenen strukturviskosen Flüssigklebstoff vorteilhaft schnell verklebt werden kann. Während die zurückgebliebene Verklebungsschicht umfassend eine Schicht mindestens eines dilatanten Flüssigklebstoffs weiterhin gelagert werden kann. Auch die kombinierte Nutzung von Flüssigklebstoffen mit zeitunabhängigem, newtonschem, thixotropem und/oder rheopexem Fließverhalten ist möglich. Bevorzugt sind Flüssigklebstoffe mit einer Fließgrenze, insbesondere einer Fließgrenze oberhalb von 10 Pa, gemessen bei einer Temperatur von 23 °C.

Die Fließgrenze ist in der Rheologie diejenige aufzubringende grenzwertige Spannung, ab der ein Stoff vom "elastischen Gedehntwerden" zum "Fließen" (das heißt von einer nicht bleibenden zu einer bleibenden Verformung) übergeht. Der Schubspannungszeitrampentest (Stress Ramp Test) dient der Ermittlung einer eventuell vorhandenen Fließgrenze. Dabei wird eine Probe mit einer Schubspannung beaufschlagt, die kontinuierlich mit der Zeit ansteigt. Die Schubspannung, bei der die Probe anfängt zu fließen, wird als Fließgrenze (Yield Point, Yield Stress) bezeichnet. Der Test ist ausführlich in Rüdiger Brummer "Rheology Essentials of Cosmetic and Food Emulsions", Springer, 2005, Seite 65 bis 67 beschrieben.

Zwischen den jeweiligen unterschiedlichen Flüssigklebstoffschichten kann eine Trennschicht vorliegen, oder aber sie liegen in direktem Kontakt aufeinander. Somit kann (iii) die mindestens eine Verklebungsschicht mindestens eine Flüssigklebstoffschicht oder mehrere umfassen, welche nebeneinander und/oder übereinander angeordnet sein können. Dies ermöglicht eine mehrfache Wiederholung des erfindungsgemäßen Verfahrens, insbesondere Spalten, mit demselben Klebebandabschnitt und gleichzeitig eine Lagerung dieses Klebebandabschnitts.

Um die Viskosität des Flüssigklebstoffs einzustellen, können alle dem Fachmann bekannten rheologisch wirksamen Additive zugesetzt werden, also zum Beispiel Verdicker newtonischer und nicht-newtonischer Art, Fließverbesserer auf der Basis von Silikonen oder solche, die kein Silikon enthalten. Solche und weitere Additive werden zum Beispiel in B. Müller: Additive Kompakt, Hannover, Vincentz, 2009 beschrieben.

Die Dicke der mindestens einen Verklebungsschicht zur Verklebung im erfindungsgemäßen Verfahren beträgt insbesondere größer gleich 0,5 µm bis kleiner gleich 1000 µm, vorzugsweise größer gleich 0,5 µm bis kleiner gleich 500 µm, größer gleich 1 µm bis kleiner gleich 500 µm, größer gleich 2 µm bis kleiner gleich 200 µm (Beispiele, Tabelle 2). Die Dicke der Verklebungsschicht ist abhängig von den verwendeten Flüssigklebstoffen, der Art des Herstellungsverfahrens, insbesondere Masseauftrag oder durch Diffusion während Lagerung, und der beabsichtigten Wiederholung des Spaltvorgans im erfindungsgemäßen Verfahren.

Bevorzugten weist (iii) die mindestens eine, insbesondere ursprüngliche, und/oder mindestens eine, insbesondere mindestens einmal gespaltene, Verklebungsschicht im Klebebandabschnitt zur Verklebung im erfindungsgemäßen Verfahren in abgebundenem Zustand eine Kohäsion von größer gleich 150 N/cm² auf, gemessen im dynamischen Schertest nach DIN-EN 1465 bei einer Schichtdicke von 100 µm, einer Geschwindigkeit von 10 mm/min und einem Klima von 23 °C und 50 % relativer Feuchte. Der Verklebungsuntergrund ist dabei so zu wählen, dass die Verklebungsschicht kohäsiv versagt.

Der Vorteil der vorbeschriebenen Ausführung des Klebebandabschnitts mit (iii) mindestens einer Verklebungsschicht, insbesondere mit der vorbeschriebenen Kohäsion, ist das verbesserte Auffließen des Klebebands im erfindungsgemäßen Verfahren, insbesondere beim in Kontakt bringen der Verklebungsschicht auf ein Substrat. Damit wird im erfindungsgemäßen Verfahren eine hervorragende Barrierewirkung erzielt, wie anhand der Wasserdampfpermeationsrate gezeigt (siehe Tabelle 3). Das verbesserte Auffließen zeigt sich in einer verbesserten Benetzung der Oberfläche eines Substrates und in einem vorzugsweise durchgängigen Kontakt zwischen Klebeband und Oberfläche des Substrats ohne Entstehen von Poren an der Grenzfläche zwischen Verklebungsschicht und Oberfläche des Substrates.

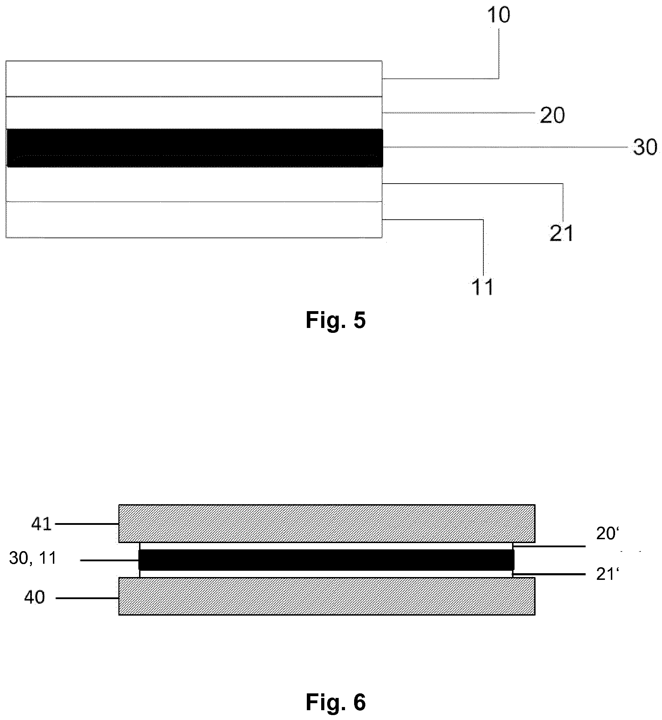

In einer besonderen Ausführung des erfindungsgemäßen Verfahrens, insbesondere zur Beschichtung, Verkapslung und/oder Schutz vor Permeaten von Oberflächen, umfasst der Klebebandabschnitt (i) mindestens eine Trägerschicht, vorzugsweise eine Haftklebemasse, und (iii) zwei Verklebungsschichten, wobei die erste Verklebungsschicht auf der ersten Oberfläche der mindestens einen Trägerschicht und die zweite Verklebungsschicht auf der zweiten Oberfläche der mindestens einen Trägerschicht angeordnet ist und die gegenüber liegende Oberfläche der jeweiligen Verklebungsschicht jeweils mit (ii) einer Deckschicht, vorzugsweise einem Liner, abgedeckt ist (Fig. 5). Die zwei Verklebungsschichten können jeweils den gleichen Flüssigklebstoff oder unterschiedliche Flüssigklebstoffe aufweisen. In dieser Ausführung ist es besonders vorteilhaft, wenn die Viskositäten der Flüssigklebstoffe unterschiedlich sind. Dadurch kann im erfindungsgemäßen Verfahren der Liner auf der einen Seite der Trägerschicht unter Spalten der Verklebungsschicht mit einer Kraft abgezogen werden, die geringer ist, als die Kraft die zum Abziehen des Liners auf der anderen Seite benötigt wird. Bevorzugt beträgt der Unterschied in der Viskosität zumindest einen Faktor 2, insbesondere zumindest einen Faktor 5. Somit ist ein weiterer Gegenstand der vorliegenden Erfindung ein Verfahren zum Verkleben eines Klebebandabschnitts umfassend (iii) mindestens zwei Verklebungsschichten (Fig. 5), wobei die erste Verklebungsschicht mindestens einen Flüssigklebstoff mit einer Viskosität aufweist, die von der Viskosität des Flüssigklebstoffs der zweiten Verklebungsschicht abweicht. Vorzugsweise weicht die Viskosität der jeweiligen Flüssigklebstoffe in den zwei Verklebungsschichten um Faktor 2 voneinander ab, besonders bevorzugt um Faktor 5. Ein dem gemäßer Viskositätsunterschied kann auch durch Einbringen oder Entzug von Energie erreicht werden, Beispielsweise kann eine Seite des Klebebands vor dem Spalten gekühlt oder erwärmt werden.

Besonders bevorzugt wird im erfindungsgemäßen Verfahren ein Klebebandabschnitt, insbesondere eine Verklebungsschicht, verklebt, worin der mindestens eine Flüssigklebstoff ein Epoxidharz umfasst. Bevorzugt umfasst die mindestens eine Verklebungsschicht des Klebebandabschnitts mindestens einen Flüssigklebstoff, der mindestens ein Epoxidharz umfasst, wobei der Klebebandabschnitt weiter bevorzugt
a) eine Haftklebemasse als Trägerschicht aufweist,
b) das vorbeschriebene Gemisch aus Haftklebemasse und Flüssigklebstoff als Trägerschicht aufweist, wobei das Epoxidharz sowohl in der Verklebungsschicht als auch in dem Gemisch oder nur in einer der beiden Schichten enthalten sein kann,
c) die vorbeschriebene aktivierbare Klebemasse als Trägerschicht aufweist, oder
d) eine zweite Deckschicht, insbesondere temporäre Abdeckschicht, als Trägerschicht aufweist.

In einer besonderen Ausgestaltung des erfindungsgemäßen Verfahrens wird ein Klebebandabschnitt verklebt, welches mindestens eine Deckschicht, mindestens eine Verklebungsschicht gemäß obiger Definition und mindestens eine Haftklebemasse umfasst, wie in Fig. 1 gezeigt, und optional mindestens eine zweite Deckschicht, insbesondere zur temporären Abdeckung und Schutz der Haftklebemasse während Lagerung und Transport und vorzugsweise zum Abziehen von und Spalten der Verklebungsschicht im erfindungsgemäßen Verfahren. Ein Beispiel für eine Haftklebemasse ist T3, wie in Tabelle 1 und den Beispielen beschrieben.

In einer weiteren Ausgestaltung des erfindungsgemäßen Verfahrens wird ein Klebebandabschnitt verklebt, welcher (ii) mindestens eine Deckschicht, (i) in Form einer Trägerschicht ein Gemisch aus mindestens einer Haftklebemasse und mindestens einem abbindbaren Flüssigklebstoff umfasst, vorzugsweise umfassend ein Epoxidharz, und (i) optional mindestens eine zweite Deckschicht. Der Aufbau dieser Ausführungsform entspricht der in Fig. 3 dargestellten Anordnung, wobei insbesondere vor Lagerung, anstelle der Verklebungsschicht das vorbeschriebene Gemisch vorliegt. Nach Austreten des mindestens einen Flüssigklebstoffs aus dem Gemisch, insbesondere während Lagerung, entsteht eine Verklebungsschicht, welche gut im erfindungsgemäßen Verfahren gespalten und verklebt werden kann. Beispiele für solche Gemische sind T1 und T2, wie in Tabelle 1 und den Beispielen beschrieben.

In einer weiteren Ausgestaltung des erfindungsgemäßen Verfahrens wird ein Klebebandabschnitt verklebt, welcher (ii) mindestens eine Deckschicht, (i) mindestens eine aktivierbare Klebemasse als Trägerschicht, (iii) mindestens eine Verklebungsschicht gemäßen obiger Definition, analog in Fig. 1 gezeigt, und (i) optional mindestens eine zweite Deckschicht umfasst.

Als (ii) Deckschicht im Sinne der Erfindung werden bevorzugt Liner eingesetzt, vorzugsweise PET-Folien. Haftklebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger beziehungsweise auf der jeweiligen Trägerschicht zu verhindern, werden die Klebebänder vor dem Wickeln mit einem Abdeckmaterial (auch als Trennmaterial bezeichnet) beziehungsweise einer Deckschicht eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebemassen (Transferklebeband) und Klebebandabschnitten (zum Beispiel Etiketten) eingesetzt. Eine weitere Funktion solcher Liner ist der Schutz der jeweiligen Klebemasse, insbesondere der mindestens einen Verklebungsschicht, vor Verschmutzung bis zur zielgerichteten Verklebung des jeweiligen Klebebandes, insbesondere im erfindungsgemäßen Verfahren.

Im erfindungsgemäßen Verfahren wird die mindestens eine Deckschicht des Klebebandabschnitts, insbesondere der mindestens eine Liner, nicht nur für die bislang im Stand der Technik bekannten Funktionen eingesetzt, sondern bevorzugt als Dosierhilfe und Applikationshilfe. Eine Deckschicht, insbesondere ein Liner, im Sinne der Erfindung wird zur Spaltung der mindestens einen Verklebungsschicht verwendet, wobei der Liner von der mindestens einen Verklebungsschicht abzogen wird. Somit umfassen Deckschichten im Sinne der Erfindung temporäre Abdeckschichten, welche im erfindungsgemäßen Verfahren von einem Klebebandabschnitt abgezogen werden. In einer besonderen Ausführungsform des Verfahrens wird ein Liner auf eine bereits mindestens einmal erfindungsgemäß gespaltene Verklebungsschicht aufgebracht. Anschließend wird der, als Dosierhilfe und Applikationshilfe, neu aufgebrachte Liner abgezogen und damit die Verklebungsschicht erneut gespalten und gleichzeitig dosiert. Die an dem neuen Liner anhaftende gespaltene Verklebungsschicht kann anschließend erneut auf ein weiteres Substrat erfindungsgemäß appliziert werden.

Somit ist im engeren Sinne ein Liner nicht Bestandteil eines Klebebandes, sondern nur ein temporäres Hilfsmittel zu dessen Herstellung, Lagerung oder für die Weiterverarbeitung, bevorzugt im erfindungsgemäßen Verfahren als Dosierhilfe beim Spaten und Applikationshilfe beim in Kontakt bringen mit einem Substrat. Ebenso ist der Verbund nur temporär und nicht dauerhaft, da der Liner vorzugsweise mit mindestens einem Teil des Flüssigklebstoffs der mindestens einen Verklebungsschicht abgezogen wird.

Ein Liner nach dem Stand der Technik besteht aus zumindest einer abhäsiven Schicht (Trennschicht), um die Adhäsionsneigung von adhärierenden Produkten gegenüber diesen Oberflächen zu verringern (trennwirksame Funktion). Diese Schicht kann auf einem Trägermaterial aufgebracht sein.

Als Trennschicht eingesetzt werden können alle dem Fachmann bekannten Systeme, insbesondere solche, welche im "Handbook of Pressure Sensitive Adhesive Technology" von Donatas Satas (Satas & Associates, Warwick 1999) genannt sind. Das Material der abhäsiven Trennschicht ist nach dem Stand der Technik bevorzugt ausgewählt aus der Gruppe umfassend Silikone, fluorierte Silikone, Silikon-Copolymere, Wachse, Carbamate, Fluorpolymere und Polyolefine oder Mischungen aus zwei oder mehr der genannten Stoffe.

Im erfindungsgemäßen Verfahren werden bevorzugt Klebebandabschnitte verklebt, worin als (ii) die mindestens eine Deckschicht ein Liner ohne Trennschicht enthalten ist, welche ausgewählt wird aus der Gruppe umfassend Papier, polymerbeschichtetes Papier, Vlies, polymerbeschichtetes Vlies, Folie, Folie umfassend biaxial verstrecktes Polyethylenterephthalat, Polybuten, Polypropylen, Polyethylen, monoaxial verstrecktes Polypropylen, biaxial verstrecktes Polypropylen oder Polyethylen, Polyolefin und Polyester und Kombinationen aus mindestens zwei der genannten Verbindungen. Vorzugsweise wird Polyolefinfolien (Polypropylen- und Polyethylenfolien) oder Polyesterfolien verwendet. Wo erforderlich kann zusätzlich, insbesondere bei mindestens zwei Deckschichten, oder anstelle einer Deckschicht ohne Trennschicht, eine Liner mit mindestens einer Trennschicht eingesetzt werden. In solchen Fällen wird die abhäsive Trennschicht ausgewählt aus Silikone, fluorierte Silikone, Silikon-Copolymere, Wachse, Carbamate, Fluorpolymere und Polyolefine oder Mischungen aus mindestens zwei der genannten Verbindungen. Besonders bevorzugt ist eine geätzte PET-Folie.

Besonders bevorzugt wird erfindungsgemäß als die mindestens eine Deckschicht ein Liner ohne abhäsive Schicht eingesetzt. Ein solcher Liner hat einen positiven Einfluss auf den Spaltvorgang der mindestens einen Verklebungsschicht. Bevorzugt wird dadurch eine homogene Spaltung der Verklebungsschicht erleichtert. Besonders bevorzugt wird die Verklebungsschicht beim Abziehen der mindestens einen Deckschicht, vorzugsweise eines Liners ohne abhäsive Schicht, in ihrer mittleren Schichtdicke (Standardabweichung plus/minus kleiner gleich 20 %) mindestens teilflächig, vorzugsweise vollflächig, homogen gespalten. Homogen gespalten bedeutet, dass eine, in ihrer Schichtdicke, homogen gespaltene Verklebungsschicht auf dem abgezogenen Liner (Deckschicht), einem Substrat und/oder auf einer Trägerschicht erhalten wird. Eine, insbesondere mindestens einmal gespaltene, Verklebungsschicht weist nach Spaltung eine homogene Schichtdicke auf, wenn sich ihre Schichtdicke über die Fläche des verwendeten Klebebandabschnittes eine Standardabweichung von plus/minus kleiner gleich 20 %, vorzugsweise kleiner gleich 10 %, besonders bevorzugt kleiner gleich 5 %, nicht übersteigt.

In einer vorteilhaften Ausführung wird im erfindungsgemäßen Verfahren ein Klebebandabschnitt verklebt, welcher mindestens eine Verklebungsschicht sowie zumindest einen Liner umfasst, wobei die Trennkraft, die erforderlich ist die Verklebungsschicht vom Liner zu lösen höher ist als die Kraft, die zum Spalten der Verklebungsschicht benötigt wird. Dies wird insbesondere durch einen Liner erreicht, der bei 23 °C und einer relativen Luftfeuchtigkeit von 50 % eine Oberflächenenergie von mehr als 30 mN/m, vorzugsweise mehr als 38 mN/m aufweist. Vorliegend wurde die Oberflächenenergie als Benetzungswinkel, wie in den Beispielen erläutert, gemessen. Somit ist wird bevorzugt ein Klebebandabschnitt erfindungsgemäß gespalten, das mindestens eine Deckschicht mit einer Oberflächenenergie von größer gleich 30 mN/m aufweist, gemessen bei 23 °C und einer relativen Luftfeuchtigkeit von 50 %, vorzugsweise größer gleich 38 mN/m. Dadurch wird eine zur Trennung der Verklebungsschicht von der mindestens einen Deckschicht höhere erforderliche Trennkraft erreicht, als die zur Spaltung der Verklebungsschicht erforderliche Trennkraft. Folglich wird beim Abziehen der Deckschicht und/oder Trägerschicht die Verklebungsschicht gespalten und nicht von der Deckschicht oder Trägerschicht abgezogen.

Bevorzugt weist der Klebebandabschnitt im erfindungsgemäßen Verfahren mindestens eine Verklebungsschicht mit einer komplexen Viskosität von kleiner gleich 10 Pas, gemessen nach ISO 6721-10 bei 23 °C und einer Frequenz von 1 rad/s, eine Schichtdicke von kleiner gleich 50 µm auf, vorzugsweise kleiner gleich 40 µm, kleiner gleich 30 µm, kleiner gleich 25 µm, kleiner gleich 15 µm, besonders bevorzugt kleiner gleich 10 µm, insbesondere kleiner gleich 5 µm, 4 µm, 3 µm, 2 µm und besonders bevorzugt kleiner gleich 1 µm, zum Beispiel 500 nm, 400 nm, 300 nm und 200 nm, da bei zu großer Schichtdicke der Verklebungsschicht die Gefahr des Austretens des Flüssigklebstoffs mit niedriger Viskosität aus dem Verbund besteht und die mindestens eine Verklebungsschicht mit einer komplexen Viskosität von kleiner gleich 1 Pas, gemessen nach ISO 6721-10 bei 23 °C und einer Frequenz von 1 rad/s, weist eine Schichtdicke von kleiner gleich 10 µm auf, vorzugsweise kleiner gleich 5 µm, kleiner gleich 3 µm, besonders bevorzugt kleiner gleich 1 µm, zum Beispiel 500 nm, 400 nm, 300 nm und 200 nm. Somit haben niedrigviskose Klebstoffe den Vorteil, dass auch leichter sehr dünne Verklebungsschichten hergestellt werden können. Da bei sehr dünnen Schichtdicken die Klebkräfte abnehmen, liegt die bevorzugte Schichtdicke einer Verklebungsschicht mit einer komplexen Viskosität von kleiner gleich 10 Pas zwischen größer gleich 1 µm und kleiner gleich 25 µm.

Umfasst des Klebebandabschnitt mindestens zwei Verklebungsschichten so kann die erste und zweite Verklebungsschicht voneinander abweichende oder gleiche Viskositäten aufweisen. Verklebungsschichten umfassend Flüssigklebstoffe mit hochviskosen beziehungsweise pastösen, Flüssigklebstoff können allein oder in Kombination mit Verklebungsschichten umfassend niedrigviskose Flüssigklebstoffe erfindungsgemäß gespalten und verklebt werden. Hochviskose beziehungsweise pastöse Flüssigklebstoffe weisen eine komplexe Viskosität von größer gleich 10⁵ mPas auf, und/oder haben insbesondere einen tan delta kleiner gleich 2, und können Schichtdicke größer gleich 10 µm aufweisen, vorzugsweise größer gleich 50 µm, bevorzugt größer gleich 200 µm, besonders bevorzugt größer gleich 500 µm. Bevorzugt weist die mindestens eine Verklebungsschicht, enthaltend mindestens einen hochviskosen Flüssigklebstoff eine Schichtdicke größer gleich 25 µm bis kleiner gleich 200 µm auf. Mit hochviskosen oder pastösen Flüssigklebstoffen lassen sich somit dickere Verklebungsschichten herstellen. Diese weisen gegenüber den dünneren Verklebungs-schichten, insbesondere solcher mit niedrigviskosen Flüssigklebstoffen, eine höhere Klebkraft auf. Ferner wird mit dickeren Verklebungsschichten, insbesondere solcher mit hochviskosen Flüssigklebstoffen, eine bessere Anpassung an unebene, insbesondere raue, Substrate erreicht. Dadurch kann auch auf Substraten mit rauen Oberflächen eine gute Verklebung und damit sehr gute Verkapselung im Sinne der Erfindung gewährleistet werden. Da hochviskose Flüssigklebstoffe eine geringe Fließfähigkeit aufweisen, werden sie bevorzugt für sehr dicke Verklebungsschichten verwendet, insbesondere für Schichtdicken größer gleich 200 µm, 300 µm, 400 µm und besonders bevorzugt größer gleich 500 µm. Um im Klebebandabschnitt, insbesondere im erfindungsgemäßen Verfahren, einen Klebstoffaustritt zu vermeiden, beträgt die bevorzugte Schichtdicke größer gleich 25 µm bis kleiner gleich 200 µm. Bei Verklebungsschichten größer gleich 200 µm kann es bei zu geringer Viskosität zum Klebstoffaustritt aus dem Verbund kommen.

In einer Ausführung des erfindungsgemäßen Verfahrens wird bevorzugt ein Klebebandabschnitt mit mindestens einer Verklebungsschicht verklebt, worin der Kontaktwinkel, gemessen zwischen einem Tropfen des mindestens einen Flüssigklebstoffs, , und der unter dem Tropfen liegenden Deckschicht (10, 11), kleiner gleich 90° beträgt, gemessen bei 23 °C und 50% relativer Luftfeuchtigkeit durch Auftropfen von 4 µl des Flüssigklebstoffs. Bevorzugt beträgt der Kontaktwinkel kleiner gleich 70°, kleiner gleich 50°, besonders bevorzugt kleiner gleich 30°, insbesondere gemessen zwischen mindestens einem Flüssigklebstoff und einer PET-Folie als Deckschicht. Ein solcher Kontaktwinkel zeigt eine hohe Affinität des Flüssigklebstoffs zur Deckschicht und beeinflusst bei einer latenten Unverträglichkeit des Flüssigklebstoffs in der Trägerschichteine Diffusion des mindestens einen Flüssigklebstoffs zur Deckschicht positiv. Dies wiederum begünstigt das Austreten des Flüssigklebstoffs aus der Trägerschicht während Lagerung. Weiter führt dies zu einer guten Benetzung des Liners durch den Flüssigklebstoff, insbesondere während der Lagerung, und nachfolgend zu einem guten Spalten der Verklebungsschicht im erfindungsgemäßen Verfahren, insbesondere homogenen Spalten beim Abziehen der mindestens einen Deckschicht von der Verklebungsschicht, insbesondere des Liners.

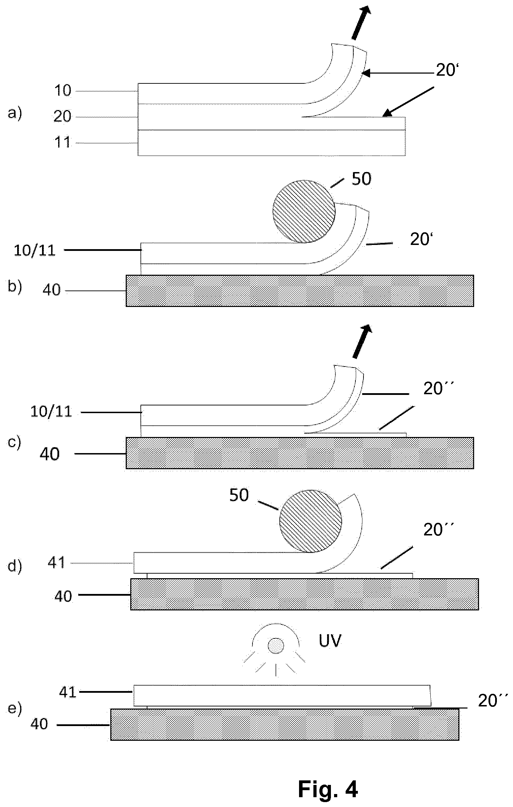

In einer Ausführung des erfindungsgemäßen Verfahrens wird eine Klebebandabschnitt, insbesondere eine Verklebungsschicht, verklebt, worin (iii) die mindestens eine spaltbare Verklebungsschicht mindestens einmal spaltbar und/oder die mindestens eine mindestens einmal gespaltene Verklebungsschicht mindestens ein weiteres Mal spaltbar ist, vorzugsweise mindestens zweimal spaltbar, wie in Fig. 4c) schematisch gezeigt. Bevorzugt kann das Spalten mehrfach wiederholt werden, mindestens ein zweites, drittes, viertes und fünftes Mal. Dabei erfolgt das Spalten jedes Mal durch Abziehen einer Trägerschicht und/oder einer Deckschicht, wie in den Figuren 2 und 4 schematisch gezeigt. Die mögliche Häufigkeit des Spaltens ist von der Ausgangsschichtdicke und der komplexen Viskosität der Verklebungsschicht abhängig.

Die erfindungsgemäße Spaltung der mindestens einen Verklebungsschicht kann mindestens einmal oder mehrfach erfolgen. Wobei die Spaltung jedes Mal von der gleichen Seite, zum Beispiel bei einer einseitig zur Verklebung vorgesehen Verklebungsschicht, insbesondere bei Ausgestaltung der mindestens einen Trägerschicht als Haftklebemasse (Fig. 2), erfolgen kann. Alternativ kann erfindungsgemäß die Spaltung auch von beiden Seiten der Verklebungsschicht erfolgen, zum Beispiel bei einer zweiseitig spaltbaren und zur Verklebung vorgesehenen Verklebungsschicht, insbesondere mit zwei Linern abgedeckte Verklebungsschicht (Fig. 4).

Um den erfindungsgemäßen Spaltvorgang mit der mindestens einmal gespaltenen Verklebungsschicht wiederholen zu können, kann eine dritte, vierte und weitere Deckschicht, insbesondere temporäre Abdeckschicht, auf die mindestens einmal gespaltene freigelegte Verklebungsschicht in einem Schritt neu aufgebracht werden, insbesondere mit der einmal gespaltenen Verklebungsschicht in Kontakt gebracht werden. Nach Aufbringen der weiteren Deckschicht kann der Spaltvorgang, wie bereits beschrieben, durch Abziehen der neuen Deckschicht wiederholt werden. Alternativ kann die bereits mindestens einmal gespaltene Verklebungsschicht mit einer neuen Trägerschicht versehen werden und erneut durch Abziehen dieser gespalten oder mit der, insbesondere eine Haftklebemasse umfassenden, Trägerschicht verklebt werden. Eine freigelegte Verklebungsschicht wird durch Abziehen einer Deckschicht und/oder Trägerschicht erhalten.

In einer besonderen Ausgestaltung des erfindungsgemäßen Verfahrens wird ein Klebebandabschnitt, insbesondere eine Verklebungsschicht, verklebt, worin die mindestens eine spaltbare Verklebungsschicht und/oder die mindestens eine mindestens einmal gespaltene Verklebungsschicht jeweils eine komplexe Viskosität aufweisen von größer gleich 1 Pas bis kleiner gleich 1000 Pas, gemessen nach ISO 6721-10 bei 23 °C und einer Frequenz von 1 rad/s. Ein Klebebandabschnitt umfassend mindestens zwei Verklebungsschichten, wobei die erste und zweite Verklebungsschicht voneinander abweichende oder gleiche Viskositäten aufweisen, kann im erfindungsgemäßen Verfahren analog, insbesondere die Verklebungsschichten nacheinander oder zeitgleich, gespalten und verklebt werden, wie in Fig. 5 und Fig. 6 gezeigt.

Bevorzugt erfolgt das erfindungsgemäße Spalten (iii) der mindestens einen spaltbaren Verklebungsschicht und/oder der mindestens einen mindestens einmal gespaltenen Verklebungsschicht im erfindungsgemäßen Verfahren durch Abziehen der mindestens einen
(i) Trägerschicht und/oder
(ii) Deckschicht von
(iii) der Verklebungsschicht und/oder mindestens einmal gespaltenen Verklebungsschicht.

Bevorzugt kann das Spalten mehrfach wiederholt werden, mindestens ein zweites, drittes, viertes und fünftes Mal. Das Spalten ist in Figuren 2 und 4 schematisch gezeigt. Die mögliche Häufigkeit des Spaltens ist von der Ausgangsschichtdicke und der komplexen Viskosität der Verklebungsschicht abhängig.

Bevorzugt werden in dem erfindungsgemäßen Verfahren durch das Abziehen der mindestens einen (i) Trägerschicht und/oder (ii) Deckschicht aus (iii) der mindestens einen spaltbaren Verklebungsschicht mindestens zwei gespaltene Verklebungsschichten hergestellt, die jeweils mit einer reduzierten Schichtdicke, bezogen auf die Schichtdicke (iii) der mindestens einen ursprünglichen Verklebungsschicht, jeweils
(i) auf der Trägerschicht, insbesondere in einer der bevorzugten in Fig. 2 und 4 dargestellten Formen a), b), c) oder d) und
(ii) auf der Deckschicht, insbesondere temporären Abdeckschicht, vorzugsweise Liner, vorliegen.

Bevorzugt werden durch das erfindungsgemäße Verfahren nach dem Abziehen mindestens zwei, zumindest teilflächig vorhandene, gespaltene Verklebungsschichten, insbesondere zur Verklebung, bereitgestellt, wobei diese frei gelegt, insbesondere einseitig frei gelegt und damit nicht mit einer anderen Schicht abgedeckt sind, und jeweils
(i) auf der Trägerschicht und
(ii) auf der Deckschicht
anhaften.

Die mindestens einmal gespaltenen Verklebungsschichten können jeweils in einer zweiten und weiteren Wiederholung des Spaltvorgangs erneut gespalten werden, wobei insbesondere ein Anteil der ursprünglichen Verklebungsschicht von größer gleich 1 Gew.-% bis kleiner gleich 99 Gew.-% an (i) der mindestens einen Trägerschicht, (ii) Deckschicht und/oder einem Substrat haften bleibt, vorzugsweise von größer gleich 10 Gew.-% bis kleiner gleich 90 Gew.-%, größer gleich 15 Gew.-% bis kleiner gleich 80 Gew.-%, besonders bevorzugt größer gleich 20 Gew.-% bis kleiner gleich 70 Gew.-%, jeweils bezogen auf die Schichtdicke der ursprünglichen Verklebungsschicht.

In einer weiteren Ausführung des erfindungsgemäßen Verfahrens umfasst das in Kontakt bringen, das zumindest teilflächige Aufbringen der mindestens einen mindestens einmal gespaltenen Verklebungsschicht auf mindestens ein Substrat. Vorteilhaft wird eine Anordnung erhalten, worin die zuvor frei gelegte Seite der vorbeschriebenen gespaltenen Verklebungsschicht zur Oberfläche des Substrats ausgerichtet ist und die an der Verklebungsschicht haftende Trägerschicht oder Deckschicht die gegenüber liegende Schicht der Anordnung bildet. Vorzugsweise ist die Oberfläche des Substrates zumindest teilflächig, vorzugsweise vollflächig, von der vorbeschriebenen gespaltenen Verklebungsschicht bedeckt.

Bevorzugt erfolgt das in Kontaktbringen der gespaltenen Verklebungsschicht mit einem Substrat in dem erfindungsgemäßen Verfahren durch Ausüben von Druck auf die mindestens eine auf dem Substrat aufgebrachte Verklebungsschicht. Insbesondere wird der Druck durch ein Hilfsmittel, vorzugsweise Walze oder Rolle, indem das Hilfsmittel in Kontakt mit der Trägerschicht oder Deckschicht gebracht wird, ausgeübt. Bevorzugt ist das Substrat nach dem in Kontakt bringen zumindest teilflächig, vorzugsweise vollflächig, mit der Verklebungsschicht bedeckt und zumindest haftet die Verklebungsschicht teilflächig, vorzugsweise vollflächig, an dem Substrat.

Bevorzugt erfolgt das Abbinden des mindestens einen Flüssigklebstoffs in dem erfindungsgemäßen Verfahren, insbesondere nach dem Spalten der Verklebungsschicht und in Kontakt bringen mit einem Substrat, durch physikalische Vorgänge und/oder chemische Reaktion erfolgt. Das Abbinden, insbesondere Vernetzen, erfolgt nach dem Spalten, in Kontaktbringen und Verkleben der spaltbaren Verklebungsschicht in der Regel als letzter Schritt in der Herstellung einer Verklebung. Unter Abbinden wird verstanden, dass der Flüssigklebstoff in eine feste Phase übergeht, damit seine Kohäsionsfestigkeit überwiegt und die Klebung ihre physikalischen und chemischen Eigenschaften entwickelt. Das Abbinden kann durch physikalische Vorgänge (Gelbildung, Hydratation, Abkühlung, Verdunsten flüchtiger Bestandteile) und/oder chemische Reaktion (Polymerisation, Vernetzung, Oxidation, Vulkanisation) bewirkt werden.

Bei den physikalisch abbindenden Systemen befinden sich die Klebstoffschichtmoleküle zum Zeitpunkt des Auftragens in der Regel bereits in ihrem makromolekularen Endzustand, von den Parametern Temperatur und Zeit abhängige chemische Reaktionen finden nicht mehr statt. Die Endfestigkeit ergibt sich direkt nach dem Ablauf der physikalischen Abbindevorgänge. Bei den chemisch reagierenden Systemen ist die Endfestigkeit sowie das werkstoffmechanische Verhalten eine zeit- und temperaturabhängige Funktion, die für den jeweiligen Härtungsmechanismus spezifisch ist.

In einer bevorzugten Ausführung des Verfahrens wird das Abbinden insbesondere bei chemisch reagierenden Systemen, bereits initiiert, bevor das in Kontakt bringen und Verkleben der gespaltenen Verklebungsschicht mit dem Substrat erfolgt. Dies ist zum Beispiel vorteilhaft, wenn mit Strahlung wie UV-Licht initiiert wird, Substrat und/oder Trägermaterial aber nicht ausreichend strahlungsdurchlässig sind. Das Abbinden wird dann nach dem in Kontakt bringen abgeschlossen. Bevorzugt werden hierzu UV-initiierte, kationisch reagierende Flüssigklebstoffe verwendet.

In einer bevorzugten Ausführung des erfindungsgemäßen Verfahrens wird ein Klebebandabschnitt mit mindestens einem Flüssigklebstoff in Form eines chemisch abbindenden Systems eingesetzt, welchem der Initiator für die chemische Reaktion (unterhalb von 200 °C, insbesondere unterhalb von 130 °C, da viele Reaktionen bei genügend hoher Temperatur auch ohne Initiator ablaufen) fehlt, zum Beispiel ein flüssiges Reaktivharz. Da Initiatoren oft Feststoffe sind, die in den Reaktivharzen oft nicht gut löslich sind, können solche initiatorfreien Flüssigklebstoffe leichter ohne störende Partikel oder zusätzliche Lösemittel zu dünnen Schichten ausgestrichen werden. In dieser Ausführung geht das Abbinden der Verklebungsschicht von der Trägerschicht aus. Dies kann dadurch gelöst werden, in dem die Trägerschicht einen (latenten) Initiator für die Abbindereaktion des Flüssigklebstoffs enthält. Erst durch einen Trigger, wie Wärme oder Strahlung, vorzugsweise UV, wird die Abbindereaktion initiiert.

In einer besonderen Ausführungsform wird das Abbinden des mindestens einen Flüssigklebstoffs durch die mindestens eine Trägerschicht initiiert. Dies ist möglich, wenn die Trägerschicht eine Zusammensetzung aufweist, die durch eine gleichartige oder ähnliche chemische Reaktion initiiert wird, die über die Schichtgrenze in die Verklebungsschicht propagiert. Besonders bevorzugt ist hier die kationische Vernetzung, wie sie zum Beispiel bei Epoxiden eingesetzt wird, da dieser Reaktionstyp eine ausgeprägte Dunkelreaktion zeigt.

Ein weiterer Gegenstand der Erfindung ist ein Verfahren zur Herstellung einer Verklebung durch Verkleben eines Klebebandabschnitts, insbesondere eines Stanzlings, Blatts, Etiketts, einer Rolle und/oder Banderole, umfassend (iii) mindestens eine Verklebungsschicht mit mindestens einem chemisch abbindenden Flüssigklebstoff ohne Initiator und mindestens eine Trägerschicht umfassend mindestens eine aktivierbare Klebemasse, bevorzugt eine reaktive aktivierbare Klebemasse umfassend mindestens eine vernetzende Verbindung, wie Polymere und/oder Reaktivharze, welche das Abbinden des mindestens einen Flüssigklebstoffs in der mindestens eine Verklebungsschicht auslöst. Bevorzugt wird das Abbinden durch einen Trigger, wie Wärmezufuhr oder Strahlung, ausgelöst, wobei diese Reaktion in die Verklebungsschicht hineinstrahlt und über die Schichtgrenzen in die Verklebungsschicht propagiert. Bevorzugt ist die kationische Vernetzung, wie zum Beispiel bei Epoxiden. Bevorzugt werden dadurch chemische Bindungen zwischen den jeweiligen Schichten erzeugt, die einen guten Schichtverbund mindestens zwischen Trägerschicht und Verklebungsschicht herstellen.

Im erfindungsgemäßen Verfahren, insbesondere zur Verklebung und Verkapselung von Oberflächen (Figuren 2, 4 und 6), erfolgt das Abbinden, insbesondere das Vernetzen, des mindestens einen, insbesondere flüssigen oder pastösen, Flüssigklebstoffs vorzugsweise durch Verdunsten oder Ablüften von Wasser beziehungsweise organischen Lösungsmitteln (zum Beispiel Lösungsmittelklebstoffe, Dispersionsklebstoffe), Gelatinierung (zum Beispiel Plastisole), Reaktion unter Luftabschluss und Metallkontakt (zum Beispiel anaerobe Klebstoffe), Reaktion durch Luftfeuchtigkeit (zum Beispiel Cyanacrylate, Einkomponenten-Polyurethane), Reaktion durch Wärmezufuhr (zum Beispiel Einkomponenten-Reaktionsklebstoffe), Reaktion durch Einfluss von Strahlen (zum Beispiel UV- oder elektronenstrahlhärtende Acrylate), Reaktion nach dem In-Kontakt-bringen von zwei oder mehreren Komponenten (zum Beispiel kalt- und warmhärtende Reaktionsklebstoffe), Verdunsten oder Ablüften organischer Lösungsmittel und anschließende Reaktion von zwei Komponenten (zum Beispiel lösungsmittelhaltige Reaktionsklebstoffe), wobei diese Abbindemechanismen bei normaler oder erhöhter Temperatur stattfinden können. Bevorzugt wird das Abbinden durch UV-Strahlung ausgelöst, insbesondere nach dem in Kontaktbringen der mindestens einmal gespaltenen Verklebungsschicht mit dem Substrat (Fig. 2, Fig. 4 und Fig. 6).

Im erfindungsgemäßen Verfahren wird durch das Abbinden eine Verbindung erhalten, insbesondere eine dauerhafte, Verbindung der Oberfläche eines ersten Substrats mit einer Trägerschicht und/oder einem weiteren Substrat. Insbesondere kann die dauerhafte Verbindung (siehe Fig. 2, 4 und 6) erhalten werden zwischen
- einer einmal gespaltenen Verklebungsschicht und einem ersten Substrat (Fig. 2c))
- einer zweimal gespaltenen Verklebungsschicht und jeweils einem ersten und einem zweiten Substrat (Fig. 4), wobei die Verklebungsschicht zwischen dem ersten und zweiten Substraten angeordnet ist, sodass eine Sandwich-Anordnung erhalten wird, und das Abbinden nach dem Aufbringen des zweiten Substrats erfolgt (Fig. 4e)), und
- einer ersten einmal gespaltenen Verklebungsschicht und einem ersten Substrat und einer zweiten einmal gespaltenen Verklebungsschicht mit einem zweiten Substrat, wobei die Verklebungsschicht durch eine Trägerschicht miteinander verbunden sind (Fig. 6).

Die in dem erfindungsgemäßen Verfahren mindestens eine mindestens einmal gespaltene, verklebte und abgebundene Verklebungsschicht und/oder Trägerschicht, insbesondere auf einem Substrat verklebte und abgebundene Verklebungsschicht und/oder Trägerschicht, weist eine Wasserdampfpermeationsrate (WVTR), gemessen nach ASTM F-1249 bei 38 °C und 90 % relativer Luftfeuchtigkeit, von kleiner gleich 50 g/m² pro Tag auf, vorzugsweise kleiner gleich 40 g/m² pro Tag, kleiner gleich 30 g/m² pro Tag, besonders bevorzugt kleiner gleich 20 g/m² pro Tag (siehe Tabelle 3). Eine im erfindungsgemäßen Verfahren erhaltene Verklebung weist ebenfalls die vorbeschriebene Wasserdampfpermeationsrate (WVTR) auf.

In einer besonderen Ausgestaltung ist das erfindungsgemäße Verfahren ein Verfahren zur Verbindung, Verklebung und/oder Verkapselung von gegenüber Permeaten sensitiven Oberflächen, insbesondere von elektronischen Bauteilen, zur Herstellung einer Verklebung mit einem hohen Schälwiderstand, zur Herstellung einer dauerhaften Verbindung zwischen mindestens zwei Werkstoffen, zur strukturellen Verklebung mit einer Zugscherfestigkeit größer gleich 1 MPa, gemessen nach DIN EN 1465 bei größer gleich 19 °C bis kleiner gleich 25 °C, vorzugsweise 23 °C und einer relativen Luftfeuchte von 50 %, zur Verklebung auf rauen Untergründen mit einer gemittelten Rautiefe r_{z} größer gleich 1,0 µm, insbesondere größer gleich 10 µm, zur Verklebung auf strukturierten Untergründen, bei denen Strukturhöhen von mehr als 1 µm vorliegen und/oder zur Verbindung und Verklebung von mindestens zwei Oberflächen aneinander, insbesondere von mindestens zwei unterschiedlichen Substraten, ist. Unter solche rauen Untergründe fallen auch Untergründe mit Stufen, zum Beispiel mit Leitstrukturen für elektrischen Strom versehene Substrate, deren Stufenhöhe größer gleich 1 µm, insbesondere größer gleich 10 µm beträgt. Solche Substrate sind häufig im Aufbau von Touch Panels zu finden. zum Beispiel

Ein bevorzugtes erfindungsgemäßes Verfahren ist die Verklebung auf rauen Untergründen. Verklebungen auf rauen Untergründen stellen besonders hohe Anforderungen an die Fließfähigkeit von Klebemasse in Haftklebebändern. Durch die im erfindungsgemäßen Verfahren, insbesondere beim Spalten der mindestens einen Verklebungsschicht, freigelegte Verklebungsschicht umfassend mindestens einen Flüssigklebstoff, wird eine sehr fließfähige Verankerungsschicht zur Verfügung gestellt. Daher wird erfindungsgemäß eine vorteilhafte Verklebung auf einem Substrat mit einer gemittelten Rautiefe r_{z} von mehr als 1 µm, insbesondere mehr als 10 µm, erzielt.

Das bevorzugte Verfahren zur strukturellen Verklebung wird im Allgemeinen und im Sinne der Erfindung als ein Verfahren verstanden, in dem durch das Kleben mögliche konstruktive Gestaltung mit hoher Festigkeit beziehungsweise Steifigkeit bei weitgehend gleichmäßiger und günstiger Spannungsverteilung erzielt werden. Weiterhin charakterisiert der Begriff "strukturelles Verkleben" auch die Forderung an eine Klebung, die an sie gestellten mechanischen und durch Alterungsvorgänge bedingten Beanspruchungen dauerhaft ohne Versagen zu erfüllen(nach Habenicht: Kleben 6. Auflage, 2009, Berlin, Springer, Seite 4). Strukturelle Haftklebstoffe verfügen insbesondere über sehr hohe Schälwiderstände. Um dies zu erreichen besitzen sie in der Regel (zum Beispiel thermisch) vernetzende Komponenten (Habenicht, Seite 194). Insbesondere ist die oben formulierte Definition "strukturelles Kleben" im Hinblick auf den Fahrzeugbau zu erweitern auf: "Dauerhaftes Verbinden steifer Werkstoffe mittels hochmoduliger und hochfester Klebstoffe unter Berücksichtigung eines größtmöglichen Crashverhaltens." (Habenicht, Seite 745). Ferner hat sich in der Praxis die Einteilung nach der Zugscherfestigkeit der Klebverbindung im überlappenden Zugscherversuch nach DIN EN 1465 durchgesetzt. Dabei wird in der Regel eine Zugscherfestigkeit bei Raumtemperatur von mehr als 10 MPa als strukturell fest angesehen, sowie zwischen 1 MPa und 10 MPa als semi-strukturell oder elastisch bezeichnet.

Für das vorbeschrieben Verfahren eingesetzte strukturelle Haftklebebänder schlagen eine Brücke zwischen den Vorteilen der konventionellen Haftklebebänder und den Reaktionsklebstoffen. Das Prinzip besteht zum Beispiel in der Zugabe latent-reaktiver Polyadditionsverbindungen, zum Beispiel Epoxidharz/Härter-Mischungen, zum haftklebenden Polymer. Erforderlich ist eine (zum Beispiel thermische) Härtung nach Herstellung der Haftklebung (Ofen, Heißluft, Kontaktwärme, IR-Strahlung, dielektrische Erwärmung), die zum Beispiel bei Anwendungen in der Karosseriefertigung gegeben ist. Der Vorteil dieser Formulierungen liegt in der Soforthaftung nach der Fügeteilfixierung und den hohen Festigkeiten, die bei entsprechender Dimensionierung der Klebeflächen die Verformungsfestigkeiten der Fügeteile überschreiten können. Durch die zusätzliche Vernetzung entfällt ergänzend der Nachteil des Kriechens bei Zeitstandbelastungen. Bei Klebebändern auf Kautschukbasis können die erwähnten strukturellen Eigenschaften zum Beispiel durch eine Polyveresterung von dem als Grundstoff eingesetzten, mit OH-und COOH-Gruppen funktionalisiertem Polybutadien, erfolgen (Habenicht Seite 246).

Daher ist ebenfalls Gegenstand der Erfindung ein Verfahren zur strukturellen und semistrukturellen Verklebung, wobei ein Klebebandabschnitt verklebt wird, welches umfasst (i) mindestens eine Trägerschicht enthaltend mindestens eine Haftklebemasse, (iii) mindestens eine Verklebungsschicht umfassend mindestens einen Flüssigklebstoff und (ii) mindestens eine Deckschicht, vorzugsweise einen Liner. Insbesondere umfasst die mindestens eine Trägerschicht eine Haftklebemasse, bevorzugt basierend auf mindestens einem Polymer enthaltend mindestens ein Vinyl-Monomer und mindestens ein Dien-Monomer, wobei Dien-Monomere ausgewählt werden aus Acrylat, Methacrylat, Isopren, Isoprenderivaten und Vinyl-Monomere ausgewählt werden aus aromatischen Vinylen, bevorzugt Styrol, besonders bevorzugt sind Copolymere aus mindestens zwei der vorgenannten Monomeren, besonders bevorzugt aus Styrol und Isopren. Die mindestens eine Verklebungsschicht umfasst mindestens einen Flüssigklebstoff, vorzugsweise ausgewählt aus Epoxidharzen sowie Mischungen aus Epoxidharzen/Härter-Mischungen. In einer Alternative ist der beschriebene Flüssigklebstoff der Zusammensetzung der Haftklebemasse enthaltend in der mindestens einen Trägerschicht, vorzugsweise umfassend Copolymere basierend auf Styrol und Dien, beigemischt.

Bevorzugt werden erfindungsgemäß Klebebandabschnitte, insbesondere Klebebänder, verklebt, wobei das Verfahren ein Verfahren zur Ausbildung von Barriereschichten ist, zur Beschichtung, Verklebung und/oder Verkapselung von Oberflächen, zur Verbindung, Anhaftung und Fixierung mindestens einer ersten Oberfläche an eine mindestens zweite Oberfläche, zum Schutz von Oberflächen vor dem Eindringen von Permeaten. In einer weiteren Ausgestaltung ist es ein Verfahren zur Verklebung und Verkapselung von Permeat empfindlichen Materialien, von Oberflächen elektronischer Anordnungen und elektronischer Bauteile, insbesondere von Displays, Monitoren, LEDs, OLEDS und anderen optoelektronischen Anordnungen.

Ein weiterer Gegenstand der vorliegenden Erfindung ist eine Verklebung, insbesondere dauerhafte Verklebung, erhältlich in dem vorbeschriebenen erfindungsgemäßen Verfahren, vorzugsweise durch Spalten, Verkleben und Abbinden mindestens einer spaltbaren Verklebungsschicht, insbesondere auf einem Substrat. Bevorzugt umfasst die erfindungsgemäße Verklebung eine Barriereschicht, welche eine Wasserdampfpermeationsrate (WVTR), gemessen nach ASTM F-1249 bei 38 °C und 90 % relativer Luftfeuchtigkeit, von kleiner gleich 50 g/m² pro Tag aufweist, vorzugsweise kleiner gleich 40 g/m² pro Tag, kleiner gleich 30 g/m² pro Tag, besonders bevorzugt kleiner gleich 20 g/m² pro Tag (siehe Tabelle 3).

Klebebandabschnitte, welche im erfindungsgemäßen Verfahren gespalten und verklebt werden können, umfassen Stanzlinge, Blätter, Etiketten, Rollen und/oder Banderolen sowie jede erdenkliche Form, die erfindungsgemäß gespalten und verklebt werden kann. Insbesondere solche, die mindestens eine (i) Trägerschicht, (ii) Deckschicht und (iii) Verklebungsschicht umfassen. Weitere Schichten, wie sie dem Fachmann im Bereich der Klebebänder geläufig sind, können ebenfalls enthalten sein, wie zum Beispiel weitere Klebstoff- oder Trägerschichten, Primer oder Releaseschichten oder Schichten mit spezifischen physikalischen Funktionen (zum Beispiel optisch wirksame Schichten, permeationshemmende oder fördernde Schichten, thermisch oder elektrisch leitfähige Schichten).

Ebenfalls ist Gegenstand der vorliegenden Erfindung die im erfindungsgemäßen Verfahren erhältlichen Zwischenprodukte gemäss Anspruch 19 umfassend
- mindestens einmal gespaltene Verklebungsschichten, welche an einer (i) Trägerschicht anhaften, insbesondere einseitig frei gelegt,
- mindestens einmal gespaltene Verklebungsschichten, welche an einer (ii) Deckschicht anhaften, insbesondere einseitig frei gelegt, und
- mindestens einmal, insbesondere mindestens zweimal, gespaltene Verklebungsschichten, welche mit einer neuen Trägerschicht und/oder Deckschicht abgedeckt wurden.

Ebenfalls Gegenstand der vorliegenden Erfindung ist eine elektronische Anordnung und/oder Bauteil gemäss Anspruch 20 erhältlich in dem erfindungsgemäßen Verfahren umfassend die vorbeschriebene erfindungsgemäße Verklebung, wobei die erfindungsgemäß verklebten und verkapselten elektronische Anordnungen und Bauteile umfassen Displays, organische oder polymere Leuchtdioden (OLEDs oder PLEDs), OLEDs oder PLEDs in Anzeige- und Display-Vorrichtungen, Elektrolumineszenzlampen, Licht emittierende elektrochemische Zellen (LEECs), organische Solarzellen, wie Farbstoff- oder Polymersolarzellen, anorganische Solarzellen, insbesondere Dünnschichtsolarzellen, Perowskitsolarzellen, organische Feldeffekt-Transistoren, organische Schaltelemente, organische optische Verstärker, organische Laserdioden, organische oder anorganische Sensoren oder auch organisch- oder anorganisch basierte RFID-Transponder. Somit werden erfindungsgemäß elektronische Bauteile und/oder Anordnungen bereitgestellt, die mindestens eine vor dem Eindringen von Permeaten gemäß dem erfindungsgemäßen Verfahren verkapselte Oberfläche aufweisen, vorzugsweise deren komplette für Permeate zugängliche, insbesondere empfindliche, Oberfläche verkapselt ist (Beispiele, Tabelle 3). Dadurch wird eine ausreichende Lebensdauer und Funktion von (opto-)elektronischen Anordnungen im Bereich der anorganischen und/oder organischen (Opto-)Elektronik, ganz besonders im Bereich der organischen (Opto-)Elektronik, erzielt. Durch die Verklebung und Verkapselung im Sinne der Erfindung werden (opto-)elektronischen Anordnungen, insbesondere im Bereich der anorganischen und/oder organischen (Opto-)Elektronik, ganz besonders sowohl gegen Wasserdampf als auch gegen Sauerstoff geschützt. Die erfindungsgemäße Verklebung und Verkapselung gewährleistet während der erhöhten Lebensdauer der elektronischen Anordnung einen Schutz, der den Abfall der Leistung über den Anwendungszeitraum vermindert oder sogar hindert. Bevorzugt wird eine luftblasenfreie Verkapslung erzielt. Weiter wird durch die Verklebungsschicht, die erfindungsgemäß auf eine Oberfläche eines Substrates, insbesondere mit der Abdeckung bei einem Verkapselungsaufbau für eine elektronische Anordnung, in Kontakt gebracht wird, vorteilhaft eine besonders gute Benetzung dieser Oberfläche hergestellt, wobei die Grenzflächenpermeation vermindert wird. Gleichzeitig wird durch die Applikation der Verklebungsschicht in Kombination mit der mindestens einen Trägerschicht die Handhabung vereinfacht sowie eine einfache und genaue Dosierung der Menge des Flüssigklebstoffs erreicht. Das mit dem Klebebandabschnitt verkapselte Bauteil weist eine Wasserdampfpermeationsrate von kleiner gleich 50 g/m² pro Tag auf, besonders bevorzugt kleiner gleich 20 g/m² pro Tag, bezogen auf eine Schichtdicke von 50 µm.

### Beschreibung der Figuren

Die Figuren erläutern die Erfindung näher, ohne die Erfindung auf die Darstellungen in den Figuren zu beschränken
- Fig. 1: zeigt einen schematischen Aufbau eines im erfindungsgemäßen Verfahren zur Verklebung geeigneten Klebebandes umfassend mindestens eine Trägerschicht 30 oder 11, mindestens eine Verklebungsschicht 20 und mindestens eine Deckschicht 10.
- Fig. 2: zeigt einen schematischen Ablauf einer Ausführung des erfindungsgemäßen Verfahrens zur Verklebung des Klebebandes, wie in Fig. 1 gezeigt. In einem Schritt a) erfolgt die erste Spaltung des bereitgestellten Klebebandes (iii) der ursprünglichen Verklebungsschicht 20 durch Abziehen der Deckschicht 10 und/oder Trägerschicht 30 und 11, wobei jeweils an der mindestens einen Deckschicht 10 und der mindestens einen Trägerschicht 30, 11 zumindest ein Teil der Verklebungsschicht 20 mindestens teilflächig, vorzugsweise vollflächig, in Form einer einmal gespaltenen Verklebungsschicht 20' anhaftet und dabei zwei einmal gespaltene und in der Schichtdicke reduzierte Verklebungsschichten 20' entstehen. In einem Schritt b) erfolgt wahlweise das Aufbringen auf einem Substrat 40 der einmal gespaltenen und in der Schichtdicke reduzierten Verklebungsschicht 20', welche entweder an der Deckschicht 10 oder Trägerschicht 30, 11 anhaftet. Das in Kontakt bringen der Verklebungsschicht, insbesondere Verkleben, kann unter Verwendung eines Hilfsmittels 50, wie einer Walze, erfolgen. In einem Schritt c) erfolgt das Abbinden des mindestens einen abbindbaren Flüssigklebstoffs in der gespaltenen Verklebungsschicht 20' und insbesondere auch in der verklebten Trägerschicht 30, vorzugsweise durch UV-Bestrahlung. Die auf der nicht verklebten Deckschicht 10 oder Trägerschicht (30, 11) verbliebene und mindestens einmal gespaltene Verklebungsschicht 20' kann für weitere analoge Verklebungen im erfindungsgemäßen Verfahren eingesetzt werden (nicht gezeigt).
- Fig. 3: zeigt einen schematischen Aufbau eines im erfindungsgemäßen Verfahren zur Verklebung, insbesondere von zwei Substraten, geeigneten Klebebandes umfassend mindestens eine Verklebungsschicht 20, mindestens eine Deckschicht 10, vorzugsweise einen ersten Liner, und mindestens eine Trägerschicht 11, hier ausgeführt als eine zweite Deckschicht 11, vorzugsweise eine temporäre Abdeckschicht, insbesondere ein zweiter Liner 11.
- Fig. 4: zeigt einen schematischen Ablauf einer Ausführung des erfindungsgemäßen Verfahrens zur Verklebung des Klebebandes, wie in Fig. 3 gezeigt. In einem Schritt a) erfolgt die erste Spaltung (iii) der ursprünglichen Verklebungsschicht 20 durch Abziehen der Deckschicht 10 und/oder der zweiten, insbesondere temporären, Abdeckschicht 11, wobei jeweils an der mindestens einen Deckschicht 10 und der mindestens zweiten, insbesondere temporären, Abdeckschicht 11 zumindest ein Teil der Verklebungsschicht 20 mindestens teilflächig, vorzugsweise vollflächig, in Form einer einmal gespaltenen Verklebungsschicht 20' anhaftet und dabei zwei einmal gespaltene und in der Schichtdicke reduzierte Verklebungsschichten 20' entstehen. In einem Schritt b) erfolgt wahlweise das in Kontakt bringen, insbesondere Aufbringen und Verkleben, auf einem Substrat 40 der einmal gespaltenen und in der Schichtdicke reduzierten Verklebungsschicht 20', welche entweder an der Deckschicht 10 oder der zweiten temporären Abdeckschicht 11 anhaftet. Das In Kontakt bringen kann unter Verwendung eines Hilfsmittels 50, wie einer Walze, erfolgen. In einem Schritt c) erfolgt ein erneutes Spalten, wie in Schritt a) beschrieben, wobei auf dem Substrat 40 eine zweimal, gespaltene Verklebungs-schicht 20" erhalten wird und an dem Substrat 40 anhaftet. Gleichzeitig wird mit der Deckschicht 10 oder temporären Abdeckschicht 11 eine einmal gespaltene Verklebungsschicht 20' gebildet und abgezogen. In einem Schritt d) erfolgt das Aufbringen eines zweiten Substrates 41, insbesondere unter Verwendung eines Hilfsmittels 50. In Schritt e) erfolgt das Abbinden des mindestens einen Flüssigklebstoffs in der zweimal, insbesondere beidseitig, gespaltenen und zweimal in ihrer Schichtdicke reduzierten Verklebungsschicht 20", vorzugsweise durch UV-Bestrahlung. Die auf der Deckschicht 10 und der zweiten temporären Abdeckschicht 11 verbliebenen, einmal oder zweimal gespaltenen, Verklebungsschichten 20' oder 20" können für weitere analoge Verklebungen in dem erfindungsgemäßen Verfahren eingesetzt werden (nicht gezeigt).
- Fig. 5: zeigt einen schematischen Aufbau eines zur Verklebung, insbesondere mit zwei Substraten, geeigneten Klebebandes umfassend mindestens eine Trägerschicht 30, eine jeweils auf der Trägerschicht 30 angeordnete erste Verklebungsschicht 20 und zweite Verklebungsschicht 21, wobei die Verklebungsschichten 20/21 jeweils mit einer Deckschicht 10 und einer zweiten temporären Abdeckschicht 11, vorzugsweise einem Liner, abgedeckt sind.
- Fig. 6: zeigt einen schematischen Aufbau einer Anordnung erhalten in dem erfindungsgemäßen Verfahren umfassend ein erstes Substrat 40 auf dem eine zweite gespaltene und in der Schichtdicke reduzierte Verklebungsschicht 21' verklebt ist, die zur gegenüberliegenden Seite mit einer Trägerschicht 30 in Kontakt steht. Die der zweiten Verklebungsschicht abgewandte Seite der Trägerschicht 30 steht in Kontakt mit der ersten gespaltenen und in der Schichtdicke reduzierten Verklebungsschicht 20', welche mit einem zweiten Substrat 41, insbesondere eines anderen Werkstoffs, verklebt ist. Diese Anordnung wird durch Verklebung eines Klebebands wie in Fig. 5 gezeigt, bei analoger Durchführung der Schritte, wie in Fig. 4 gezeigt und beschrieben, erzielt.

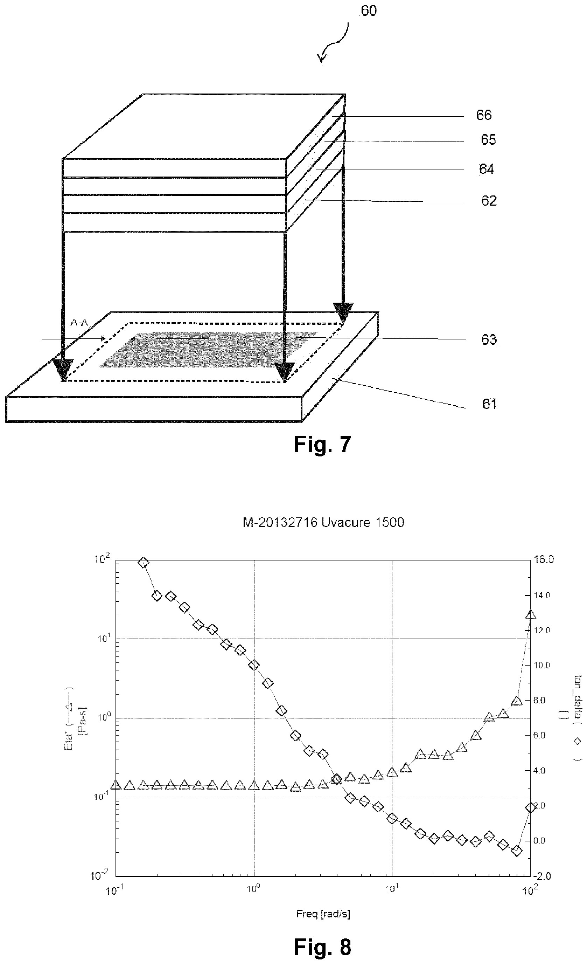

- Fig. 7: zeigt einen skizzierten Aufbau zur Durchführung des Lebensdauertests 60 umfassend eine Glasplatte 61, eine darauf angeordnete Calciumschicht 63, eine auf der Calciumschicht 63 angeordnete zu testende Klebemasse 62 in einem Klebeband, eine auf der Klebemasse 62 angeordnete Dünnglasscheibe 64 ein auf der Dünnglasschreibe 64 angeordnetes Transferklebeband 65 und eine auf dem Transferklebeband 65 angeordnete PET-Folie 66.
- Fig. 8: zeigt das Diagramm zu Beispiel 4, was die bestimmte komplexe Viskosität Eta* und den bestimmten Verlustfaktor tan delta des Flüssigklebstoffs Uvacure 1500 bei 23 °C und verschiedenen Frequenzen beschreibt.

### Bezugszeichen

- 10: Deckschicht, insbesondere temporäre Abdeckschicht, vorzugsweise ein Liner
- 11: Trägerschicht, ausgeführt als zweite Deckschicht (Liner), insbesondere temporäre Abdeckschicht
- 20: Verklebungsschicht 1 umfassend mindestens einen abbindbaren Flüssigklebstoff
- 21: Verklebungsschicht 2 umfassend mindestens einen abbindbaren Flüssigklebstoff
- 20': einmal gespaltene Verklebungsschicht 1
- 20": zweimal gespaltene Verklebungsschicht 1
- 21': mindestens einmal gespaltene Verklebungsschicht 2
- 30: Trägerschicht, insbesondere als Haftklebemasse, Gemisch aus Haftklebemasse und Flüssigklebstoff oder aktivierbare Klebemasse
- 40: Substrat 1, insbesondere mit einer gegenüber Permeaten empfindlichen Oberfläche
- 41: Substrat 2, insbesondere mit einer gegenüber Permeaten empfindlichen Oberfläche
- 50: Hilfsmittel, insbesondere Walze oder Handrolle
- 60: Aufbau des Lebensdauertests
- 61: Glasplatte
- 62: zu testende Klebemasse in einem Klebeband
- 63: Calciumschicht
- 64: Dünnglasscheibe
- 65: Transferklebeband
- 66: PET-Folie

### Beispiele

### Messmethoden

### Erweichungstemperatur / Glasübergangstemperatur:

Die Erweichungstemperatur von Copolymeren, Hart- und Weichblöcken und ungehärteten Reaktivharzen wird kalorimetrisch über die Differential Scanning Calorimetry (DSC) nach DIN 53765:1994-03 bestimmt. Aufheizkurven laufen mit einer Heizrate von 10 K/min. Die Muster werden in Al-Tiegeln mit gelochtem Deckel und Stickstoffatmosphäre vermessen. Es wird die zweite Aufheizkurve ausgewertet. Bei amorphen Stoffen treten Glasübergangstemperaturen auf, bei (semi)kristallinen Stoffen Schmelztemperaturen. Ein Glasübergang ist als Stufe im Thermogramm erkennbar. Die Glasübergangstemperatur wird als Mittelpunkt dieser Stufe ausgewertet. Eine Schmelztemperatur ist als Peak im Thermogramm erkennbar. Als Schmelztemperatur wird diejenige Temperatur notiert, bei der die höchste Wärmetönung auftritt.

### Molekulargewicht:

Die Molekulargewichtsbestimmungen der zahlenmittleren Molekulargewichte Mₙ und der gewichtsmittleren Molekulargewichte M_{w} erfolgten mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

### MMAP und DACP:

MMAP ist der gemischte-Methylcyclohexan-Anilin-Trübungspunkt, der unter Verwendung eines modifizierten ASTM C 611-Verfahrens bestimmt wird. Methylcyclohexan ist für das in dem Standard-Prüfverfahren verwendete Heptan eingesetzt. Das Verfahren verwendet Harz/Anilin/Methylcyclohexan in einem Verhältnis von 1/2/1 (5 g/10 ml/5 ml) und der Trübungspunkt wird durch Abkühlen einer erhitzten, klaren Mischung der drei Komponenten, bis die vollständige Trübung gerade eintritt, bestimmt.

Der DACP ist der Diaceton-Trübungspunkt und wird durch Abkühlen einer erhitzten Lösung von 5 g Harz, 5 g Xylol und 5 g Diacetonalkohol bis zu dem Punkt bestimmt, bei welchem die Lösung trübe wird.

### Klebharzerweichungstemperatur:

Die Klebharzerweichungstemperatur wird nach der einschlägigen Methodik durchgeführt, die als Ring and Ball bekannt und nach ASTM E28 standardisiert ist.

Zur Bestimmung der Klebharzerweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt. Der resultierende Probekörper wird samt Zylinder in die Probehalterung des HRB 754 eingelegt. Zur Befüllung des Temperierbads wird Glycerin verwendet, sofern die Klebharzerweichungstemperatur zwischen 50 °C und 150 °C liegt. Bei niedrigeren Klebharzerweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Klebharzerweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Klebharzerweichungstemperatur ist der Mittelwert aus den beiden Einzelmessungen.

### Bestimmung der komplexen Viskosität mittels DMA nach ISO 6721-10:

Die komplexe Viskosität, und damit das Speichermodul und Verlustmodul, für Klebemassen wird im oszillatorischen Scherexperiment (Dynamisch mechanische Analyse, DMA) unter Torsionsbelastung bei einer Temperatur von 23 °C und einer Frequenz von 1 rad/s bestimmt. Der Test ist in ISO 6721-10 ausführlich beschrieben. Er wird in einem schergeschwindigkeitskontrollierten Rheometer unter Torsionsbelastung gefahren, wobei eine Platte-Platte-Geometrie mit einem Plattendurchmesser von 25 mm verwendet wird.

Aus Verlustmodul G" und dem Speichermodul G' wird durch den Quotienten G"/G' der Verlustfaktor tan δ ermittelt. Ist der Verlustmodul G" größer als der Speichermodul G' und damit tan δ größer gleich 1, so liegt ein fließfähiger beziehungsweise flüssiger Klebstoff vor. Bevorzugt ist tan δ jedoch größer als 2, besonders bevorzugt größer als 5 (siehe Fig. 8).

### Kontaktwinkelmessung beziehungsweise Benetzungswinkel nach Habenicht: Kleben, 6. Auflage, 2009, Seite 342:

In dieser Methode wird der Benetzungswinkel α zwischen dem Flüssigklebstoff und einem Fügeteil gemessen. Hierbei wird ein Tropfen eines definierten Volumens in Anlehnung an die DIN EN 828 von 4 µl des zu testenden Flüssigklebstoffs bei Raumtemperatur und einer relativen Luftfeuchtigkeit von 50 % in Anlehnung an DIN EN 828 auf eine zu untersuchende gereinigte Oberfläche, wie Deckschicht, Trägerschicht oder Liner, aufgetropft und der Benetzungswinkel unter Verwendung einer Kamera gemessen. Wie vorliegend durchgeführt, wird nach dem Stand der Technik (Habenicht, Seite 342) der Benetzungswinkel, den der Flüssigklebstoff mit einem Fügeteil bildet, als Maß für die Benetzbarkeit der Fügeteiloberfläche mit dem Klebstoff und somit der Güte der möglichen Klebeverbindung ermittelt. Vorteil dieser Methode gegenüber der Methode nach DIN ISO 8296 oder DIN EN 828 ist, dass das reale System mit den sich tatsächlich aufeinander treffenden Substraten (Fügeteiloberfläche) und Flüssigklebstoff untersucht und gemessen wird. Dieses Maß wird erfindungsgemäß auch für die Verbindung zwischen Deckschicht (Liner) und Flüssigklebstoff verwendet.

Bevorzugt weist der Flüssigklebstoff unter den obigen Bedingungen einen Benetzungswinkel von kleiner gleich 90 ° auf der Deckschicht auf.

### Bestimmung Scherzugfestigkeit mittels dynamischem Schertest nach ISO 29862:

Ein Klebeband wird zwischen zwei Glasplatten verklebt und abgebunden, in den Beispielen insbesondere mittels UV-Licht gehärtet (UV-Dosis: Summe UV-A+B+C, ermittelt mit dem Power Puck der Firma EIT, von 2000 mJ/cm²). Danach wurden die verklebten Prüfkörper eine Stunde bei 80 °C gelagert. Der Verbund wird in einer Zugprüfmaschine mit 50 mm/min bei 23 °C und 50 % relativer Feuchte so getrennt, dass die beiden Glasplatten unter einem Winkel von 180° auseinander gezogen wurden, und die Maximalkraft in N/cm² ermittelt. Dabei wird ein quadratisches Prüfmuster mit einer Kantenlänge von 25 mm untersucht. Zusätzlich wird die Bruchart bestimmt. Es wird zwischen einem kohäsiven Bruch (K), adhäsiven Bruch (A) und einem Mischbruch (M) unterschieden.

### Bestimmung der Wasserdampfpermeationsrate (WVTR) nach ASTM F-1249:

Die Wasserdampfpermeationsrate (WVTR) wurde nach ASTM F-1249 bei einer Temperatur von 38 °C und einer relativen Luftfeuchtigkeit von 90 % gemessen und in g/m² pro Tag bestimmt. Als Testflächen wurden abgebundener Flüssigklebstoff beziehungsweise Trägermaterial jeweils mit einer Schichtdicke von 50 µm eingesetzt. Bevorzugt liegt die Wasserdampfpermeationsrate bei kleiner gleich 50 g/m² pro Tag, besonders bevorzugt bei kleiner gleich 20 g/m² pro Tag.

### Bestimmung der Lebensdauer (WVTR-Ca):

Als ein Maß für die Lebensdauer eines elektronischen Aufbaus und zur Bestimmung der Permeationsrate von Wasserdampf (WVTR) wurde ein Calciumtest durchgeführt. Dieser ist in der Figur 7 gezeigt. Dazu wird im Vakuum eine 10 x 10 mm² große, dünne Calciumschicht 63 auf eine Glasplatte 61 abgeschieden und danach unter Stickstoffatmosphäre gelagert. Die Dicke der Calciumschicht 63 liegt bei etwa 100 nm. Für die Verkapselung der Calciumschicht 63 wird ein Klebeband (26 x 26 mm²) mit der zu testenden Klebemasse 62 sowie einer Dünnglasscheibe 64 (35 µm, Firma Schott) als Trägermaterial verwendet. Zur Stabilisierung war die Dünnglasscheibe 64 mit einer 100 µm dicken PET-Folie 66 mittels eines 50 µm dicken Transferklebebandes 65 und einer optisch hochtransparenten Acrylathaftklebemasse laminiert. Die Klebemasse 62 wird so auf die Glasplatte 61 appliziert, dass die Klebemasse 62 den Calciumspiegel 63 mit einem allseitig überstehenden Rand von 6,5 mm (A-A) abdeckt. Aufgrund des undurchlässigen Glasträgers 64 wird nur die Permeation durch das Klebeband oder entlang der Grenzflächen ermittelt.

Der Test basiert auf der Reaktion von Calcium mit Wasserdampf und Sauerstoff, wie sie beispielsweise von A.G. Erlat et. al. in "47th Annual Technical Conference Proceedings-Society of Vacuum Coaters", 2004, Seiten 654 bis 659, und von M. E. Gross et al. in "46th Annual Technical Conference Proceedings-Society of Vacuum Coaters", 2003, Seiten 89 bis 92, beschrieben ist. Dabei wird die Lichttransmission der Calciumschicht überwacht, welche durch die Umwandlung in Calciumhydroxid und Calciumoxid zunimmt. Diese erfolgt beim beschriebenen Prüfaufbau vom Rand her, so dass sich die sichtbare Fläche des Calciumspiegels verringert. Es wird die Zeit bis zur Halbierung der Lichtabsorption des Calciumspiegels als Lebensdauer bezeichnet. Durch die Methode werden dabei sowohl der Abbau der Fläche des Calciumspiegels vom Rand aus und durch punktuellen Abbau in der Fläche als auch die homogene Verringerung der Schichtdicke des Calciumspiegels durch vollflächigen Abbau erfasst.

Als Messbedingungen wurden 60 °C und 90 % relative Luftfeuchte gewählt. Die Muster wurden mit der jeweils angegebenen Schichtdicke vollflächig und blasenfrei verklebt. Danach wurde durch den Dünnglasträger mittels UV-Licht abgebunden (Dosis: 120 mJ/cm²; UV-C gemessen zwischen 250 und 260 nm; Lampentyp: undotierter Quecksilberstrahler). Der Messwert (in h) ergab sich als Mittelwert aus drei Einzelmessungen.

Aus der Zeit (d = Tag) bis zum vollständigen Abbau des Calciumspiegels wird zudem eine Wasserdampfpermeationsrate (Ca-WVTR) berechnet. Dazu wird die Masse des aufgedampften Calciums mit dem Faktor 0.9 multipliziert (Massenverhältnis H₂O/Ca für die Umsetzungsreaktion von metallischem Calcium zu transparentem Calciumhydroxid) um die Masse des einpermeierten Wasserdampfes zu ermitteln. Diese wird auf den Permeationsquerschnitt (Umfangslänge des Testaufbaus x Klebemassedicke) sowie die Zeit bis zum vollständigen Abbau des Calciumspiegels bezogen. Der errechnete Messwert wird weiterhin durch die Breite des allseitig überstehenden Rands (in mm) geteilt und somit auf eine Permeationsstrecke von 1 mm normiert. Die Angabe des Ca-WVTR erfolgt in g/m² pro Tag.

### Bestimmung der Schichtdicke (gravimetrisch, geometrisch):

Die Schichtdicke der Verklebungsschicht wird gravimetrisch bestimmt. Hierzu wird der bekannte Masseauftrag auf die beschichtete Fläche umgerechnet in g/m² oder g/cm². Um die Schichtdicke in [µm] zu bestimmen wird dieser Wert durch die angenäherte Dichte von 1 g/cm³ geteilt, oder es kann zum Beispiel eine mikroskopische Analyse erfolgen.

Im Folgenden soll die Erfindung anhand mehrerer Beispiele näher erläutert werden, ohne mit diesen die Erfindung in irgendeiner Weise beschränken zu wollen.

### Beispiele

### Verwendete Bestandteile:

Sofern nicht anders angegeben, sind alle Mengenangaben in den nachfolgenden Beispielen Gewichtsprozente beziehungsweise Gewichtsteile bezogen auf die Gesamtzusammensetzung ohne Photoinitiator. Die Photoinitiatormenge bezieht sich auf die Menge des eingesetzten Epoxidharzes.

| | |
|---|---|
| SibStar 62 M: | SiBS (Polystyrol-block-Polyisobutylen-Blockcopolymer) der Firma Kaneka mit 20 Gew.-% Blockpolystyrolgehalt. |
| Uvacure 1500: | cycloaliphatisches Diepoxid der Firma Cytec Viskosität bei 23 °C etwa 300 mPas |
| Escorez 5300: | ein vollhydriertes Kohlenwasserstoffharz der Firma Exxon (Ring and Ball Erweichungstemperatur 105 °C, DACP = 71, MMAP = 72), |
| Triarylsulfoniumhexa-fluoroantimonat: | kationischer Fotoinitiator von der Firma Sigma-Aldrich Der Photoinitiator weist ein Absorptionsmaximum im Bereich 320 nm bis 360 nm auf und lag als 50 Gew.-%-ige Lösung in Propylencarbonat vor. |

### Herstellung von Haftklebemassen als Trägerschicht

Für das erfindungsgemäße Verfahren wurden für das zu verklebende Klebeband geeignete Trägerschichten in Form von Haftklebemassen hergestellt. Für eine Haftklebemasse, die in den Beispielen K1 bis K11 als Trägerschicht dient, wurde ein Polystyrol-Block-Polyisobutylen-Blockcopolymer (Sibstar 62M, Firma Kaneka) als Polymerbasis ausgewählt. Der Anteil an Styrol im Gesamtpolymer beträgt 20 Gew.-%. Die Molmasse beträgt 60.000 g/mol. Die Glasübergangstemperatur der Polystyrolblöcke beträgt 100 °C und die der Polyisobutylenblöcke -60 °C.

**Tabelle 1**

| **Trägerschicht (Haftklebemasse)** | **T1** | **T2** | **T3** |
|---|---|---|---|
| | Gew.-% | Gew.-% | Gew.-% |
| Sibstar 62M | 37,5 | 33,4 | 46,0 |
| Uvacure 1500 | 25 | 33,3 | 0,0 |
| Escorez 5300 | 37,5 | 33,3 | 54,0 |
| Triarylsulfoniumhexafluoroantimonat | 1 | 1 | 1 |

Als Klebharz wurde Escorez 5300 (Firma Exxon) ein vollhydriertes Kohlenwasserstoffharz ausgewählt.

Als Reaktivharz, insbesondere Flüssigklebstoff, wurde Uvacure 1500 (Firma Dow) ausgewählt, das ein cycloaliphatisches Diepoxid (3,4-Epoxycyclohexylmethyl 3,4-epoxycyclohexanecarboxylate) ist und eine Glasübergangstemperatur von -53 °C aufweist. Diese Bestandteile wurden bei Raumtemperatur in einem Gemisch aus Toluol (300 Teile), Aceton (150 Teile) und Siedegrenzenbenzin 60/95 (550 Teile) gelöst, so dass eine 50 Gew.-% Lösung entstand. Anschließend wurde der Lösung der Photoinitiator Triarylsulfoniumhexafluoroantimonat zugesetzt.

Mittels eines Rakelverfahrens wurden die Formulierungen aus Lösung auf einen silikonisierten PET-Liner als eine Trägerschicht beschichtet und bei 120 °C für 15 min getrocknet. Der Masseauftrag der Haftklebemassen T1, T2 oder T3, als eine bevorzugte Ausführung einer Trägerschicht betrug 50 g/m². Die Muster wurden mit einer weiteren Lage eines silikonisierten, aber leichter trennenden, PET-Liners als eine Deckschicht eingedeckt.

### Herstellung eines für das erfindungsgemäße Verfahren geeigneten Klebebandes

Es wurden verschiedene Klebebänder hergestellt. Für die Muster K1 bis K8 und K11 wurde eine konventionelle, nicht silikonisierte PET-Folie mit einer Dicke von etwa 25 µm als ein erster Liner (Deckschicht) für einen Klebebandaufbau nach Fig. 1 verwendet. Diese Folie wurde mittels einer Corona-Entladung mit einer Dosis von etwa 80 Wmin/m vorbehandelt. Auf die vorbehandelte Folie wurde als Verklebungsschicht der Flüssigklebstoff Uvacure 1500 (einschließlich 1 % Fotoinitiator) in den Schichtdicken 4 µm, 6 µm, 12 µm, 24 µm, 36 µm, 50 µm und 60 µm mittels entsprechender Drahtrakel oder einem Streichbalken ausgestrichen. Als weitere Deckschicht wurde eine geätzte PET-Folie als ein erster Liner mit einer Dicke von 50 µm verwendet, wie sie von der Firma Coveme (Italien) hergestellt wird. Auf die geätzte Folie wurde als Verklebungsschicht der Flüssigklebstoff Uvacure 1500 (in einer 25 %-igen Lösung in Toluol, ohne Fotoinitiator) ausgestrichen, so dass sich eine getrocknete Schichtdicke von 0,8 µm ergab. Von der Haftklebemasse T1 (Trägerschicht T1), wurde der leichter zu trennende Liner entfernt und die auf den Linern (Deckschichten) jeweils ausgestrichene Verklebungsschicht des Flüssigklebstoffs mittels einer Handrolle auf die Trägerschicht T1 laminiert. Bei Schichtdicken von mehr als 25 µm zeigt sich dabei zunehmend ein Herausquetschen des Flüssigklebstoffs aus dem Verbund, so dass Schichtdicken unterhalb von 25 µm, insbesondere von weniger als 10 µm bei niedrigviskosen Flüssigklebstoffen mit einer komplexen Viskosität von kleiner gleich 10 Pas, insbesondere weniger als 1 Pas, gemessen nach ISO 6721-10 bei 23 °C und einer Frequenz von 1 rad/s, bevorzugt werden. Weiterhin zeigt das Herausfließen des Flüssigklebstoffs bei dickeren Verklebungsschichten der hier vorliegenden Viskosität von etwa 300 mPas, dass bevorzugt die Viskosität oberhalb von 500 mPas, besonders bevorzugt für sehr dicke Schichten oberhalb von 5000 Pas, liegt, da darunter die Gefahr besteht, dass der Flüssigklebstoff aus dem Schichtverbund ausläuft. Die Herstellung des Musters K11 umfassend eine Trägerschicht T3 (Haftklebemasse ohne Flüssigklebstoff), eine Verklebungsschicht (Uvacure) und eine Deckschicht (PET-Folie) erfolgte analog.

Der Laminationsvorgang wurde bei den Mustern für den Lebensdauertest und die Zugscherversuche für die zweite Seite wiederholt. Es zeigte sich überraschend, dass trotz gleichen Flüssigklebstoffs und gleichen Liners ein Liner von einer Seite wieder unter Spalten der Verklebungsschicht entfernt werden kann, ohne dass sich der Liner von der zweiten Seite dabei löst.

Somit wurden hier nur eine Ausführung eines geeigneten Klebebandes, umfassend eine Trägerschicht (Haftklebemasse) mit Flüssigklebstoff (T1) oder ohne Flüssigklebstoff (T3), eine Verklebungsschicht (Uvacure) unterschiedlicher Schichtdicke und eine Deckschicht (PET-Folie oder geätzte PET-Folie) hergestellt (Tabelle 2), die im erfindungsgemäßen Verfahren sehr gut durch Abziehen mindestens einer Deckschicht mindestens einmal gespalten werden können.

Für das Muster K9 wurde auf die Trägerschicht in Form einer geätzten PET-Folie der Flüssigklebstoff Uvacure 1500 (mit 1 % Fotoinitiator) als Verklebungsschicht ausgestrichen, sodass sich eine Schichtdicke von 24 µm ergab. Auf diese Verklebungsschicht wurde eine weitere geätzte Folie (Deckschicht) des gleichen Typs laminiert. Somit wurde ein Klebeband (Fig. 3) umfassend eine Trägerschicht (geätzte PET-Folie) ohne Flüssigklebstoff, eine Verklebungsschicht (Uvacure) und eine Deckschicht (geätzte PET-Folie) (Tab. 2) für das erfindungsgemäße Verfahren, wie in Fig. 4 gezeigt, hergestellt.

Für das Muster K10 wurde die Haftklebemasse T2 als Trägerschicht mit der oben genannten geätzten PET-Folie als Liner laminiert und für 7 Tage bei 23 °C gelagert. Im Lauf der Lagerung reicherte sich der Flüssigklebstoff ausschließlich zwischen Deckschicht und Trägerschicht an und bildete so die eine Verklebungsschicht, welche im erfindungsgemäßen Verfahren (Fig. 2 und Fig. 4) gut gespalten wird. Auf der mit dem silikonisierten Liner abgedeckten Seite des Trägermaterials bildete sich kein Flüssigklebstofffilm.

**Tabelle 2: Für das erfindungsgemäße Verfahren geeignete Klebebänder**

| **Muster** | **Trägerschicht** | **Flüssigklebstoff** | **Schichtdicke Verklebungsschicht [µm]** | **Deckschicht** |
|---|---|---|---|---|
| K1 | T1 | Uvacure 1500 mit Initiator | 4 | PET |
| K2 | T1 | Uvacure 1500 mit Initiator | 6 | PET |
| K3 | T1 | Uvacure 1500 mit Initiator | 12 | PET |
| K4 | T1 | Uvacure 1500 mit Initiator | 24 | PET |
| K5 | T1 | Uvacure 1500 mit Initiator | 36 | PET |
| K6 | T1 | Uvacure 1500 mit Initiator | 50 | PET |
| K7 | T1 | Uvacure 1500 mit Initiator | 60 | PET |
| K8 | T1 | Uvacure 1500 ohne Initiator | 0,8 | geätztes PET |
| K9 | geätztes PET | Uvacure 1500 mit Initiator | 24 | geätztes PET |
| K10 | T2 | enthalten in T2 | nach Lagerung 24 Std. etwa 0,5 µm | geätztes PET |
| K11 | T3 | Uvacure 1500 mit Initiator | 12 | PET |

**Tabelle 3**

| **Muster** | **Trägerschicht** | **Flüssigklebstoff** | **dyn. Schertest [N/cm²]** | **WVTR-Ca-Test [g/m²d]** |
|---|---|---|---|---|
| K10 | T2 | enthalten in T2 mit Initiator | 340 K | 0,17 |
| K1 | T1 | Uvacure 1500 mit Initiator | 180 K | n.a. |
| K2 | T1 | Uvacure 1500 mit Initiator | 220 K | n.a. |
| K3 | T1 | Uvacure 1500 mit Initiator | 190 K | 0,18 |
| K4 | T1 | Uvacure 1500 mit Initiator | 180 K | n.a. |
| K8 | T1 | Uvacure 1500 ohne Initiator | 200 K | 0,21 |
| K9 | geätztes PET | Uvacure 1500 mit Initiator | 2150 M | n.a. |
| K10 | T2 | Enthalten in T2 mit Initiator | 340 K | 0,17 |
| K11 | T3 | Uvacure 1500 mit Initiator | 34 K | 0,85 |
| T1 | T1 | - | 190 A | 0,24 |
| T2 | T2 | - | 270 A | 0,20 |
| T3 | T3 | - | 32 K | 1,22 |

| | | | | |
|---|---|---|---|---|
| Bruchart: K=kohäsiv; A=adhäsiv; M=Mischbruch. Als Vergleichsmuster wurden die Haftklebebänder T1 und T2 gewählt. | | | | |

Tabelle 2 fasst die für das erfindungsgemäße Verfahren hergestellte Muster geeigneter Klebebänder (K1 bis K11) zusammen. In Tabelle 3 sind die im Schertext und Lebensdauertest geprüften Muster dargestellt, welche im erfindungsgemäßen Verfahren gespalten und verklebt worden sind. Aus Tabelle 3 ist ersichtlich, dass in K2 bis K4 mit zunehmender Schichtdicke die Kohäsion [N/cm²] abnimmt. Ein Klebeband K10, das nach 24 Stunden Lagerung bei Raumtemperatur, insbesondere größer gleich 19 °C bis kleiner gleich 23 °C, eine Verklebungsschicht von 0,5 µm an der Grenzfläche zwischen Trägerschicht T2 und Deckschicht (PET-Folie) aufweist, zeigt eine hohe Kohäsion von 340 N/cm². Während sich unmittelbar nach der Lamination die geätzte PET-Folie aufgrund ihrer unmittelbaren Haftung an der Trägerschicht T2 nur mit großem Kraftaufwand im erfindungsgemäßen Verfahren abziehen ließ, spaltete nach der Lagerzeit die ausgebildete Verklebungsschicht erfindungsgemäß bei geringem Kraftaufwand. Da eine mikroskopische Bestimmung der Schichtdicke nicht möglich war, wurde die Schichtdicke aus Äquivalenzbetrachtungen von Spaltkraft und Spaltverhalten im Vergleich zu den weiteren Versuchen (insbesondere zu K8) mit etwa 0,5 µm abgeschätzt.

Die dynamischen Schertests zeigen ferner, dass sich zwar die Festigkeit der Verklebung für die Muster K1 - K4 nicht gegenüber dem Vergleichsmuster T1 erhöht, aber das Bruchbild sich bei Durchführung des erfindungsgemäßen Verfahrens ändert. Der Übergang vom Adhäsionsbruch beim Muster T1 zum Kohäsionsbruch bei den erfindungsgemäß hergestellten Verklebungen zeigt das verbesserte Auffließen und damit die verbesserte Verbindung zum Substrat hergestellt im erfindungsgemäßen Verfahren. Die Kohäsionsbruchstelle lag in der Regel an der Grenzfläche der Verklebungsschicht zur Trägerschicht.

Das Muster K8 zeigt, dass auch ohne Initiierung des Abbindens in der Verklebungsschicht eine Aushärtung erreicht wird, was hier auf das Propagieren der kationischen Vernetzung von der Trägerschicht in die Verklebungsschicht zurückgeführt wird.

Die untersuchten Muster K3 und K8 weisen zudem eine verbesserte Wasserdampfbarriere (WVTR) im Lebensdauertest auf, was auf die verbesserte Benetzung beim in Kontaktbringen der Substratoberfläche mit der Verklebungsschicht im erfindungsgemäßen Verfahren zurückgeführt wird. Dies zeigt die Vorteile des erfindungsgemäßen Verfahrens für die Verkapselung gegenüber Permeat sensibler elektronischer Aufbauten.

Das Muster K9 zeigt, dass auch ein Verfahren nach Fig. 3 und Fig. 4 zu einer erfolgreichen Verklebung führt, die hier semi-strukturelle Festigkeit (>1 MPa) aufweist. Dies zeigt die besondere Eignung des erfindungsgemäßen Verfahrens zur Verklebung von Klebebändern mit zwei, insbesondere temporären, Deckschichten zur Herstellung von Verklebungen mit semistruktureller und je nach Auswahl des Flüssigklebstoffs auch struktureller Festigkeit (> 10 MPa).

Das Muster K10 zeigt, dass sich hier eine wirksame Schicht eines Flüssigklebstoffs bildet, die sowohl eine höhere Festigkeit als auch eine verbesserte Wasserdampfbarriere (WVTR) ermöglicht. Benetzungswinkelmessungen des Flüssigklebstoffs auf dem geätzten PET ergaben einen Winkel von 20° während Vergleichsmessungen des Flüssigklebstoffs auf dem silikonisierten PET-Liner einen Randwinkel von 85° zeigten. Dies weist auf eine bevorzugte selbsttätige Ausbildung einer Verklebungsschicht bei einem Benetzungswinkel zwischen Flüssigklebstoff und Liner von weniger als 30° hin.

### Bestimmung des Verlustfaktors tan delta von Uvacure 1500

Der Verlustfaktor tan delta δ des Flüssigklebstoffs Uvacure 1500 wurde (ohne Initiatorzusatz) bestimmt zu 10,0. Das einwandfreie Spaltverhalten (Fig. 8) zeigt, dass ein Verlustfaktor tan δ von mehr als 5 für den Spaltvorgang im erfindungsgemäßen Verfahren günstig ist.

## Patentansprüche

1. Verfahren zur Herstellung einer Verklebung umfassend die Schritte
- Bereitstellen eines spaltbaren Klebebandabschnitts umfassend mindestens eine zumindest teilflächig vorhandene, spaltbare Verklebungsschicht (20, 21) mit einer komplexen Viskosität kleiner gleich 10⁵ Pas, gemessen nach ISO 6721-10 bei 23 °C und einer Frequenz von 1 rad/s, und/oder mit einem Verlustfaktor tan delta von größer gleich 1, gemessen mittels Dynamisch mechanischer Analyse DMA bei 23 °C und einer Frequenz von 1 rad/s, umfassend mindestens einen abbindbaren Flüssigklebstoff,
- Spalten der mindestens einen spaltbaren Verklebungsschicht (20, 21), und
- Erhalten mindestens einer mindestens einmal gespaltenen Verklebungsschicht (20', 20", 21'),
- in Kontaktbringen der mindestens einen gespaltenen Verklebungsschicht (20', 20", 21') mit mindestens einem Substrat (40, 41) und
- Abbinden des mindestens einen Flüssigklebstoffs in der einen mindestens einmal gespaltenen Verklebungsschicht (20', 20", 21').

2. Verfahren nach Anspruch 1, **dadurch gekennzeichnet, dass** der spaltbare Klebebandabschnitt umfasst
(i) mindestens eine Trägerschicht (30, 11)
(ii) mindestens eine Deckschicht (10) und
(iii) mindestens eine zumindest teilflächig vorhandene spaltbare Verklebungsschicht (20, 21) umfassend mindestens einen abbindbaren Flüssigklebstoff,
wobei die mindestens eine Verklebungsschicht (20, 21) zwischen der mindestens einen (i) Trägerschicht (30, 11) und (ii) der mindestens einen Deckschicht (10) angeordnet ist.

3. Verfahren nach Anspruch 2, **dadurch gekennzeichnet, dass**
(i) die mindestens eine Trägerschicht (30) umfasst
a) mindestens eine Haftklebemasse, oder
b) ein Gemisch aus mindestens einer Haftklebemasse und mindestens einem Flüssigklebstoff oder
c) mindestens einer aktivierbaren Klebemasse mit einer komplexen Viskosität größer gleich 10000 Pas, gemessen nach ISO 6721-10 bei 23 °C und einer Frequenz von 1 rad/s.

4. Verfahren nach einem der Ansprüche 1 bis 3, **dadurch gekennzeichnet, dass** (iii) die mindestens eine spaltbare Verklebungsschicht (20, 21) erhältlich ist durch Austreten des mindestens einen Flüssigklebstoffs aus (i) der mindestens einen Trägerschicht (30) umfassend ein Gemisch aus mindestens einem Trägerschichtmaterial, insbesondere einer Haftklebemasse, und mindestens einem Flüssigklebstoff.

5. Verfahren nach einem der Ansprüche 3 oder 4, **dadurch gekennzeichnet, dass** die mindestens eine Haftklebemasse umfasst mindestens eine Verbindung auf Basis von Acrylaten, (Meth)acrylaten, Polyurethanen, Naturkautschuken, Synthesekautschuken, Styrolblockcopolymeren, Styrolblockcopolymeren mit einem Elastomerblock aus ungesättigten oder hydrierten Polydienblöcken, Polyolefinen, Polyestern, Fluorpolymeren und/oder Silikonen und/oder Mischungen aus mindestens zwei der genannten Verbindungen.

6. Verfahren nach Anspruch 1 oder 2, **dadurch gekennzeichnet, dass**
(i) die mindestens eine Trägerschicht d) eine zweite Deckschicht (11) ist.

7. Verfahren nach einem der Ansprüche 1 bis 5, **dadurch gekennzeichnet, dass** der mindestens eine Flüssigklebstoff umfasst Vinylacetat, Polyvinylalkohol, Polyvinylacetal, Polyvinylchlorid, (Meth-)acrylat, Polyamid sowie Copolymeren aus mindestens zwei der vorgenannten Verbindungen, Cellulose, Harnstoff, Melaminharz, Phenolharz, Epoxid, Polyurethan, Polyester, Polyaromat, Chloropren, Nitril-Kautschuk, Styrol, Butylkautschuk, Polysulfid und/oder Silikon oder Mischungen aus mindestens zwei der genannten Verbindungen.

8. Verfahren nach einem der Ansprüche 1 bis 7, **dadurch gekennzeichnet, dass** der mindestens eine Flüssigklebstoff mindestens ein Epoxidharz umfasst.

9. Verfahren nach einem der Ansprüche 1 bis 8, **dadurch gekennzeichnet, dass** der Kontaktwinkel, gemessen zwischen einem Tropfen des mindestens einen Flüssigklebstoffs und der unter dem Tropfen liegenden Deckschicht (10, 11), kleiner gleich 90° beträgt, gemessen bei 23 °C und 50 % relativer Luftfeuchtigkeit durch Auftropfen von 4 µl des Flüssigklebstoffs.

10. Verfahren nach einem der Ansprüche 1 bis 9, **dadurch gekennzeichnet, dass** (iii) die mindestens eine spaltbare Verklebungsschicht (20, 21) mindestens einmal spaltbar ist und/oder die mindestens eine mindestens einmal gespaltene Verklebungsschicht (20', 20", 21') mindestens ein weiteres Mal spaltbar ist.

11. Verfahren nach einem der Ansprüche 1 bis 10, **dadurch gekennzeichnet, dass** die mindestens eine spaltbare Verklebungsschicht (20, 21) und/oder die mindestens eine mindestens einmal gespaltene Verklebungsschicht (20', 20", 21') jeweils eine komplexe Viskosität aufweisen von größer gleich 1 Pas bis kleiner gleich 1000 Pas, gemessen nach ISO 6721-10 bei 23 °C und einer Frequenz von 1 rad/s

12. Verfahren nach einem der Ansprüche 1 bis 11, **dadurch gekennzeichnet, dass** das Spalten (iii) der mindestens einen spaltbaren Verklebungsschicht (20, 21) und/oder der mindestens einen mindestens einmal gespaltenen Verklebungsschicht (20', 20", 21') durch Abziehen der mindestens einen
(i) Trägerschicht (30, 11) und/oder
(ii) Deckschicht (10) von
(iii) der Verklebungsschicht (20, 21) und/oder (20', 21') erfolgt.

13. Verfahren nach Anspruch 12, **dadurch gekennzeichnet, dass** durch das Abziehen der mindestens einen
(i) Trägerschicht (30, 11) und/oder
(ii) Deckschicht (10) aus
(iii) der mindestens einen spaltbaren Verklebungsschicht (20, 21) mindestens zwei gespaltene Verklebungsschichten (20', 20", 21') hergestellt werden, die jeweils mit einer reduzierten Schichtdicke, bezogen auf die Schichtdicke (iii) der mindestens einen ursprünglichen Verklebungsschicht (20, 21), jeweils
(i) auf der Trägerschicht (30, 11) und
(ii) auf der Deckschicht (10) vorliegen.

14. Verfahren nach Anspruch 12 oder 13, **dadurch gekennzeichnet, dass** nach dem Abziehen mindestens zwei frei gelegte und jeweils
(i) auf der Trägerschicht (30, 11) und
(ii) auf der Deckschicht (10)
haftende, zumindest teilflächig vorhandene, gespaltene Verklebungsschichten (20', 21') bereitgestellt werden.

15. Verfahren nach einem der Ansprüche 1 bis 14, **dadurch gekennzeichnet, dass** das in Kontakt bringen umfasst,
das zumindest teilflächige Aufbringen der mindestens einen mindestens einmal gespaltenen Verklebungsschicht (20', 20", 21') auf mindestens ein Substrat (40, 41).

16. Verfahren nach einem der Ansprüche 1 bis 15, **dadurch gekennzeichnet, dass** das Abbinden des mindestens einen Flüssigklebstoffs durch physikalische Vorgänge und/oder chemische Reaktion erfolgt.

17. Verfahren nach Anspruch 16 **dadurch gekennzeichnet, dass**
durch das Abbinden eine Verbindung der Oberfläche eines ersten Substrats (40) mit einer Trägerschicht (30, 11), einer Deckschicht (10) und/oder einem weiteren Substrat (41) erhalten wird.

18. Verfahren nach einem der Ansprüche 1 bis 17, **dadurch gekennzeichnet, dass** die mindestens eine mindestens einmal gespaltene, verklebte und abgebundene Verklebungsschicht und/oder Trägerschicht eine Wasserdampfpermeationsrate (WVTR) von kleiner gleich 50 g/m² pro Tag aufweist, gemessen nach ASTM F-1249 bei 38 °C und 90 % relativer Luftfeuchtigkeit.

19. Verklebung erhältlich in einem Verfahren nach Anspruch 3, wobei die spaltbare Verklebungsschicht (20, 21) eine vollflächig vorhandene spaltbare Verklebungsschicht (20, 21) ist.

20. Elektronische Anordnung und/oder Bauteil erhältlich in einem Verfahren nach Anspruch 3 umfassend eine Verklebung nach Anspruch 19 umfassend Displays, organische oder polymere Leuchtdioden (OLEDs oder PLEDs), OLEDs oder PLEDs in Anzeige- und Display-Vorrichtungen, Elektrolumineszenzlampen, Licht emittierende elektrochemische Zellen (LEECs), organische Solarzellen, wie Farbstoff- oder Polymersolarzellen, anorganische Solarzellen, insbesondere Dünnschichtsolarzellen, Perowskitsolarzellen, organische Feldeffekt-Transistoren, organische Schaltelemente, organische optische Verstärker, organische Laserdioden, organische oder anorganische Sensoren oder auch organisch- oder anorganisch basierte RFID-Transponder.

## Claims

1. Method for producing an adhesive bond, comprising the steps of
- providing a cleavable adhesive tape section comprising at least one cleavable adhesive-bonding layer (20, 21), present over at least part of the surface, having a complex viscosity of less than or equal to 10⁵ Pas, measured in accordance with ISO 6721-10 at 23°C and a frequency of 1 rad/s, and/or having a loss factor tan delta of greater than or equal to 1, measured by means of dynamic mechanical analysis DMA at 23°C and a frequency of 1 rad/s, comprising at least one settable liquid adhesive,
- cleaving the at least one cleavable adhesive-bonding layer (20, 21), and
- obtaining at least one adhesive-bonding layer (20', 20'', 21') which has been cleaved at least once,
- contacting the at least one cleaved adhesive-bonding layer (20', 20'', 21') with at least one substrate (40, 41) and
- setting the at least one liquid adhesive in the adhesive-bonding layer (20', 20'', 21') which has been cleaved at least once.

2. Method according to Claim 1, **characterized in that** the cleavable adhesive tape section comprises
(i) at least one backing layer (30, 11),
(ii) at least one cover layer (10) and
(iii)at least one cleavable adhesive-bonding layer (20, 21), present over at least part of the surface, comprising at least one settable liquid adhesive,
where the at least one adhesive-bonding layer (20, 21) is arranged between the at least one (i) backing layer (30, 11) and (ii) the at least one cover layer (10).

3. Method according to Claim 2, **characterized in that** (i) the at least one backing layer (30) comprises
a) at least one pressure-sensitive adhesive composition, or
b) a mixture of at least one pressure-sensitive adhesive composition and at least one liquid adhesive, or
c) at least one activatable adhesive composition having a complex viscosity of greater than or equal to 10 000 Pas, measured in accordance with ISO 6721-10 at 23°C and a frequency of 1 rad/s.

4. Method according to any of Claims 1 to 3, **characterized in that**
(iii)the at least one cleavable adhesive-bonding layer (20, 21) is obtainable by egress of the at least one liquid adhesive from (i) the at least one backing layer (30) comprising a mixture of at least one backing layer material, in particular a pressure-sensitive adhesive composition, and at least one liquid adhesive.

5. Method according to either of Claims 3 and 4, **characterized in that**
the at least one pressure-sensitive adhesive composition comprises at least one compound based on acrylates, (meth)acrylates, polyurethanes, natural rubbers, synthetic rubbers, styrene block copolymers, styrene block copolymers having an elastomer block of unsaturated or hydrogenated polydiene blocks, polyolefins, polyesters, fluoropolymers and/or silicones and/or mixtures of at least two of the mentioned compounds.

6. Method according to Claim 1 or 2, **characterized in that**
(i) the at least one backing layer d) is a second cover layer (11).

7. Method according to any of Claims 1 to 5, **characterized in that**
the at least one liquid adhesive comprises vinyl acetate, polyvinyl alcohol, polyvinyl acetal, polyvinyl chloride, (meth)acrylate, polyamide and also copolymers of at least two of the abovementioned compounds, cellulose, urea, melamine resin, phenolic resin, epoxide, polyurethane, polyester, polyaromatic, chloroprene, nitrile rubber, styrene, butyl rubber, polysulfide and/or silicone or mixtures of at least two of the mentioned compounds.

8. Method according to any of Claims 1 to 7, **characterized in that**
the at least one liquid adhesive comprises at least one epoxy resin.

9. Method according to any of Claims 1 to 8, **characterized in that** the contact angle measured between a drop of the at least one liquid adhesive and the cover layer (10, 11) located beneath the drop is less than or equal to 90°, measured at 23°C and 50% relative humidity by application of a drop of 4 µl of the liquid adhesive.

10. Method according to any of Claims 1 to 9, **characterized in that**
(iii) the at least one cleavable adhesive-bonding layer (20, 21) is cleavable at least once and/or the at least one adhesive-bonding layer (20', 20'', 21') which has been cleaved at least once is cleavable at least one further time.

11. Method according to any of Claims 1 to 10, **characterized in that**
the at least one cleavable adhesive-bonding layer (20, 21) and/or the at least one adhesive-bonding layer (20', 20'', 21') which has been cleaved at least once each have a complex viscosity of greater than or equal to 1 Pas to less than or equal to 1000 Pas, measured in accordance with ISO 6721-10 at 23°C and a frequency of 1 rad/s.

12. Method according to any of Claims 1 to 11, **characterized in that**
the cleaving (iii) of the at least one cleavable adhesive-bonding layer (20, 21) and/or of the at least one adhesive-bonding layer (20', 20'', 21') which has been cleaved at least once is accomplished by removing the at least one
(i) backing layer (30, 11) and/or
(ii) cover layer (10) from
(iii)the adhesive-bonding layer (20, 21) and/or (20', 21').

13. Method according to Claim 12, **characterized in that** the removal of the at least one
(i) backing layer (30, 11) and/or
(ii) cover layer (10) from
(iii)the at least one cleavable adhesive-bonding layer (20, 21)
produces at least two cleaved adhesive-bonding layers (20', 20'', 21') which are each present with a reduced layer thickness, based on the layer thickness (iii) of the at least one original adhesive-bonding layer (20, 21), in each case
(i) on the backing layer (30, 11) and
(ii) on the cover layer (10).

14. Method according to Claim 12 or 13, **characterized in that**
after the removal there are provided at least two exposed, cleaved adhesive-bonding layers (20', 21') adhering in each case
(i) to the backing layer (30, 11) and
(ii) to the cover layer (10)
and present over at least part of the surface.

15. Method according to any of Claims 1 to 14, **characterized in that**
the contacting comprises
the application, over at least part of the surface, of the at least one adhesive-bonding layer (20', 20'', 21'), which has been cleaved at least once, to at least one substrate (40, 41).

16. Method according to any of Claims 1 to 15, **characterized in that**
the setting of the at least one liquid adhesive is accomplished by physical processes and/or chemical reaction.

17. Method according to Claim 16, **characterized in that** the setting produces a bond of the surface of a first substrate (40) to a backing layer (30, 11), a cover layer (10) and/or a further substrate (41).

18. Method according to any of Claims 1 to 7, **characterized in that**
the at least one backing layer and/or adhesive-bonding layer which has at least once been cleaved, adhesively bonded and set has a water vapour permeation rate (WVTR) of less than or equal to 50 g/m² per day, measured in accordance with ASTM F-1249 at 38°C and 90% relative humidity.

19. Adhesive bond obtainable in a method according to Claim 3, wherein the cleavable adhesive-bonding layer (20, 21) is a cleavable adhesive-bonding layer (20, 21) which is present over all of the surface.

20. Electronic arrangement and/or component obtainable in a method according to Claim 3, comprising an adhesive bond according to Claim 19, comprising displays, organic or polymeric light-emitting diodes (OLEDs or PLEDs), OLEDs or PLEDs in indication and display apparatuses, electroluminescent lamps, light-emitting electrochemical cells (LEECs), organic solar cells, such as dye or polymer solar cells, inorganic solar cells, especially thin-film solar cells, perovskite solar cells, organic field-effect transistors, organic switching elements, organic optical amplifiers, organic laser diodes, organic or inorganic sensors, or else organically or inorganically based RFID transponders.

## Revendications

1. Procédé pour la production d'un collage, comprenant les étapes
- fourniture d'un segment de ruban adhésif pelable comprenant au moins une couche de collage détachable par pelage (20, 21), présente au moins sur une partie de la surface, ayant une viscosité complexe inférieure ou égale à 10⁵ Pa.s, mesurée selon ISO 6721-10 à 23 °C et une fréquence de 1 rad/s, et/ou ayant un facteur de perte tan delta supérieur ou égal à 1, mesuré par analyse mécanique dynamique AMD à 23 °C et une fréquence de 1 rad/s, comprenant au moins un adhésif liquide apte à la prise,
- détachement par pelage de ladite au moins une couche de collage détachable par pelage (20, 21), et
- obtention d'au moins une couche de collage au moins une fois détachée par pelage (20', 20'', 21'),
- mise en contact de ladite au moins une couche de collage détachée par pelage (20', 20'', 21'), avec au moins un support (40, 41) et
- prise dudit au moins un adhésif liquide dans ladite une couche de collage au moins une fois détachée par pelage (20', 20'', 21').

2. Procédé selon la revendication 1, **caractérisé en ce que**
le segment de ruban adhésif pelable comprend
(i) au moins une couche de support (30, 11)
(ii) au moins une couche de recouvrement (10) et
(iii) au moins une couche de collage détachable par pelage (20, 21), présente au moins sur une partie de la surface, comprenant au moins un adhésif liquide apte à la prise,
ladite au moins une couche de collage (20, 21) étant disposée entre (i) ladite au moins une couche de support (30, 11) et (ii) ladite au moins une couche de recouvrement (10).

3. Procédé selon la revendication 2, **caractérisé en ce que**
(i) ladite au moins une couche de support (30) comprend
a) au moins une masse autoadhésive, ou
b) un mélange d'au moins une masse autoadhésive et d'au moins un adhésif liquide ou
c) au moins une masse adhésive activable ayant une viscosité complexe supérieure ou égale à 10 000 Pa.s, mesurée selon ISO 6721-10 à 23 °C et une fréquence de 1 rad/s.

4. Procédé selon l'une quelconque des revendications 1 à 3, **caractérisé en ce que** (iii) ladite au moins une couche de collage détachable par pelage (20, 21) peut être obtenue par échappement dudit au moins un adhésif liquide à partir de (i) ladite au moins une couche de support (30) comprenant un mélange d'au moins une matière de couche de support, en particulier d'une masse autoadhésive, et d'au moins un adhésif liquide.

5. Procédé selon l'une quelconque des revendications 3 et 4, **caractérisé en ce que** ladite au moins une masse autoadhésive comprend au moins un composé à base d'acrylates, de (méth)acrylates, polyuréthanes, caoutchoucs naturels, caoutchoucs synthétiques, copolymères séquencés de styrène, copolymères séquencés de styrène comportant une séquence élastomère à base de blocs polydiène hydrogénés ou insaturés, polyoléfines, polyesters, polymères fluorés et/ou silicones et/ou de mélanges d'au moins deux des composés cités.

6. Procédé selon la revendication 1 ou 2, **caractérisé en ce que** (i) ladite au moins une couche de support d) est une deuxième couche de recouvrement (11).

7. Procédé selon l'une quelconque des revendications 1 à 5, **caractérisé en ce que** ledit au moins un adhésif liquide comprend l'acétate de vinyle, le poly(alcool vinylique), le polyvinylacétal, le poly(chlorure de vinyle), un (méth)acrylate, un polyamide ainsi que des copolymères d'au moins deux des composés précités, la cellulose, l'urée, une résine mélamine, une résine phénolique, un époxyde, le polyuréthane, un polyester, un composé polyaromatique, le chloroprène, le caoutchouc nitrile, le styrène, le caoutchouc butyle, un polysulfure et/ou un silicone ou des mélanges d'au moins deux des composés cités.

8. Procédé selon l'une quelconque des revendications 1 à 7, **caractérisé en ce que** ledit au moins un adhésif liquide comprend au moins une résine époxy.

9. Procédé selon l'une quelconque des revendications 1 à 8, **caractérisé en ce que** l'angle de contact, mesuré entre une goutte dudit au moins un adhésif liquide et la couche de recouvrement (10, 11) se trouvant sous la goutte, est inférieur ou égal à 90°, mesuré à 23 °C et 50 % d'humidité relative de l'air, par application en gouttes de 4 µl de l'adhésif liquide.

10. Procédé selon l'une quelconque des revendications 1 à 9, **caractérisé en ce que** (iii) ladite au moins une couche de collage détachable par pelage (20, 21) est au moins une fois détachable par pelage et/ou ladite au moins une couche de collage au moins une fois détachée par pelage (20', 20'', 21') est au moins encore une fois détachable par pelage.

11. Procédé selon l'une quelconque des revendications 1 à 10, **caractérisé en ce que** ladite au moins une couche de collage détachable par pelage (20, 21) et/ou ladite au moins une couche de collage au moins une fois détachée par pelage (20', 20'', 21') présentent chacune une viscosité complexe de ≥ 1 Pa.s à ≤ 1 000 Pa.s, mesurée selon ISO 6721-10 à 23 °C et une fréquence de 1 rad/s.

12. Procédé selon l'une quelconque des revendications 1 à 11, **caractérisé en ce que** le détachement par pelage de (iii) ladite au moins une couche de collage détachable par pelage (20, 21) et/ou de ladite au moins une couche de collage au moins une fois détachée par pelage (20', 20'', 21') s'effectue par pelage de ladite au moins une
(i) couche de support (30, 11) et/ou
(ii) couche de recouvrement (10) de
(iii) la couche de collage (20, 21) et/ou (20', 21').

13. Procédé selon la revendication 12, **caractérisé en ce que** par le pelage de ladite au moins une
(i) couche de support (30, 11) et/ou
(ii) couche de recouvrement (10) à partir de
(iii) ladite au moins une couche de collage détachable par pelage (20, 21)
sont produites au moins deux couches de collage (20', 20'', 21') détachées par pelage, qui sont présentes chacune avec une épaisseur de couche réduite, par rapport à l'épaisseur de couche de (iii) ladite au moins une couche de collage (20, 21) initiale, respectivement
(i) sur la couche de support (30, 11) et
(ii) sur la couche de recouvrement (10).

14. Procédé selon la revendication 12 ou 13, **caractérisé en ce qu'**après le pelage sont fournies au moins deux couches de collage (20', 21') détachées par pelage, posées librement et présentes sur au moins une partie de la surface, adhérant respectivement
(i) à la couche de support (30, 11) et
(ii) à la couche de recouvrement (10).

15. Procédé selon l'une quelconque des revendications 1 à 14, **caractérisé en ce que** la mise en contact comprend
l'application sur au moins une partie de la surface de ladite au moins une couche de collage au moins une fois détachée par pelage (20', 20'', 21'), sur au moins un support (40, 41).

16. Procédé selon l'une quelconque des revendications 1 à 15, **caractérisé en ce que** la prise dudit au moins un adhésif liquide s'effectue par des processus physiques et/ou réaction chimique.

17. Procédé selon la revendication 16, **caractérisé en ce que** par la prise est obtenu un assemblage de la surface d'un premier support (40) avec une couche de support (30, 11), une couche de recouvrement (10) et/ou un autre support (41).

18. Procédé selon l'une quelconque des revendications 1 à 17, **caractérisé en ce que** ladite au moins une couche de support et/ou couche de collage au moins une fois détachée par pelage, collée et ayant pris présente un taux de perméation de vapeur d'eau (WVTR) de ≤ 50 g/m² par jour, mesuré selon ASTM F-1249 à 38 °C et 90 % d'humidité relative de l'air.

19. Collage pouvant être obtenu dans un procédé selon la revendication 3, dans lequel la couche de collage détachable par pelage (20, 21) est une couche de collage détachable par pelage (20, 21) présente sur toute la surface.

20. Dispositif et/ou composant électronique(s) pouvant être obtenu(s) dans un procédé selon la revendication 3, comprenant un collage selon la revendication 19, comprenant des afficheurs, des diodes électroluminescentes organiques ou polymères (OLED ou PLED), des OLED ou PLED dans des appareils d'affichage et tableaux de signalisation, des lampes à électroluminescence, des cellules électrochimiques photoémettrices (LEEC), des cellules solaires organiques, telles que des cellules solaires à colorants ou polymères, des cellules solaires inorganiques, en particulier des cellules solaires à couche mince, des cellules solaires à pérovskites, des transistors à effet de champ organiques, des éléments commutateurs organiques, des amplificateurs optiques organiques, des diodes laser organiques ou des capteurs organiques ou inorganiques ou bien des transpondeurs RFID à base organique ou inorganique.
